(19) Europäisches Patentamt
European Patent Office
Office européen des brevets

(11) EP 4 381 012 B1

(12) EUROPEAN PATENT SPECIFICATION

(45) Date of publication and mention of the grant of the patent:
**08.10.2025 Bulletin 2025/41**

(21) Application number: **22760737.1**

(22) Date of filing: **03.08.2022**

(51) International Patent Classification (IPC):
***C08K 5/5435*** *(2006.01)* ***C08F 8/42*** *(2006.01)*
***C09D 151/00*** *(2006.01)* *B27K 5/02* *(2006.01)*

(52) Cooperative Patent Classification (CPC):
(C-Sets available)
**C08K 5/5435; C08F 8/42; C09D 151/003;**
B27K 5/02 (Cont.)

(86) International application number:
**PCT/EP2022/071806**

(87) International publication number:
**WO 2023/012213 (09.02.2023 Gazette 2023/06)**

(54) **PROCESS FOR MODIFYING AN AQUEOUS POLYMER LATEX**

VERFAHREN ZUR MODIFIZIERUNG EINES WÄSSRIGEN POLYMERLATEX

PROCÉDÉ DE MODIFICATION D’UN LATEX POLYMÈRE AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2021 EP 21189579**

(43) Date of publication of application:
**12.06.2024 Bulletin 2024/24**

(73) Proprietor: **BASF SE**
**67056 Ludwigshafen am Rhein (DE)**

(72) Inventors:
- **BALK, Roelof**
  **67459 Boehl-Iggelheim (DE)**
- **LOHMEIJER, Bastiaan**
  **67056 Ludwigshafen (DE)**
- **WAGNER, Oliver**
  **67056 Ludwigshafen (DE)**
- **ROSCHMANN, Konrad**
  **67056 Ludwigshafen (DE)**

(74) Representative: **BASF IP Association**
**BASF SE**
**GBI - Z078**
**67056 Ludwigshafen (DE)**

(56) References cited:
**WO-A1-2015/192363**
**US-A1- 2007 154 646**
**US-A1- 2011 214 796**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 381 012 B1

(52) Cooperative Patent Classification (CPC): (Cont.)

C-Sets
**C08F 8/42, C08F 220/14;**
**C08F 8/42, C08F 265/06;**
**C09D 151/003, C08K 5/5435**

## Description

The present invention relates to a process for modifying an aqueous polymer latex of polymer particles that bear carboxyl groups, comprising at least one mixing step, where the aqueous polymer latex is mixed with at least one silane compound at an elevated temperature.

The present invention also relates to modified aqueous polymer latexes obtainable by such process and to the use of these polymer latexes as binders or co-binders for industrial varnishes.

BACKGROUND ON THE INVENTION

The main objectives of most coatings are not only aesthetic and decorative effects, but also protective effects such as scratch-, abrasion-, water- or chemical-resistance. The challenge is to provide coatings which do not lose their beneficial properties, especially protective effects over time. This aspect becomes more important for those applications, where the surfaces to be coated are difficult to access and coating application is more complex or where the surfaces are subjected to mechanical or environmental stress. Therefore, the durability of coatings is a key performance characteristic, and improving durability is always one of the essential goals of new product development efforts.

For interior wood coatings one of the main concerns is the protection of the wooden surface against mechanical or chemical damage. The requirements of wood coatings for interior use, in particular for wood flooring and furniture industry (usually clear varnishes and pigmented, coloured lacquers) differ markedly from those of the waterproofing systems utilized for exterior wood coatings. Because of the strong mechanical and chemical stress to which such wood coatings are frequently exposed, there are stringent requirements in terms of hardness, scratch-, abrasion-, water/water vapour- and chemical-resistance, as well as good film transparency, good accentuation of wood grains, good processing properties, and low swelling properties of wood fibres.

Organofunctional silanes are poly-functional compounds that combine the functionality of a reactive organic functional group with the functionality of an alkyl silicate. They are frequently used for modifying the properties of organic polymer binders in coating formulations. Depending on the nature of the organic binder polymer, the reactive organic group of the organofunctional silanes can be chosen e.g. from primary and substituted amino, epoxy, methacryl, vinyl, glycidoxy, mercapto, isocyanato, methacryloxy and urea groups. The reactive organic group of organofunctional silanes is chosen such as it reacts with functional groups of the polymeric binder. Alternatively, the functional group may be capable of co-polymerizing with the monomers forming the polymer binder. For example, aminofunctional silanes may be reacted with NCO-terminated polyurethanes or acrylic/methacrylic polymers having isocyanto groups or epoxy groups, while isocyanatosilanes may be reacted with OH-functional polymers, such as polyesters, polyurethanes. Organofunctional silanes having polymerizable or chain transfer groups, especially unsaturated silanes such as vinyl or methacryloxysilanes and mercaptosilanes, can be incorporated into polymer chains via a radical grafting reaction or via co-polymerization during production of the polymer. Aminofunctional silanes and epoxyfunctional silanes may be used to modify polymer resins by polymer analogue reactions with functional groups of the polymer such as carboxyl- or hydroxyl groups.

The organofunctional silane-modified polymers are able to form stable siloxane bonds via the crosslinking of the remaining Si-alkoxy groups and to bind to the surface of filler or pigment particles or other inorganic surfaces because the alkoxy group of organofunctional silanes is cleaved via hydrolysis in the presence of moisture and thus highly reactive Si-OH groups are formed which are capable of binding to the inorganic surface. This special property allows for using the organofunctional silanes as molecular bridges between organic polymers and inorganic materials present in the coating. This bridging property promotes adhesion of the coating but also increases the mechanical strength of the coating by self-crosslinking of the polymer chains and by forming stable polymer composites with pigments and fillers present in the coating.

For example, the addition of epoxy functional silanes to carboxyl-functionalized polymer latexes enhances adhesion to mineral substrates and/or improves self-crosslinking properties and, thus, improves chemical resistances, e.g. against solvents like methyl-ethyl ketone, of coatings. M.J. Chen et al. in Modern Paint and Coatings (1998), 88(1), 43-49 describe that several epoxy silanes based on either beta-3,4-epoxycyclohexane or gamma-glycidoxypropane lead to significantly improved hardness and chemical resistance of respective coatings and can be potential, less health-hazardous alternatives for aziridine or formaldehyde-based crosslinkers. These epoxy silanes are added to ready-made, commercial emulsion polymers at ambient temperatures.

A. Dhanabalan et al. in Proceedings of the International Waterborne, High-Solids, and Powder Coatings Symposium (2008), 35th, 323-334 describe the advantageous properties of several epoxy silanes as a crosslinker for base resins.

US 4032487 as well as US 4077932 teach the addition of epoxy silanes to acrylic latex adhesives for improving adhesion to inorganic substrates and providing high water resistance. The silane is added to the aqueous polymer latex obtained from the emulsion polymerization after cooling.

Alternatively, epoxy silanes may be added before or during emulsion polymerization as non-polymerizable

"comonomer" being part of the emulsion feed. This method is described e.g. in more detail in EP 0640629. Post-addition of the epoxy silane is described to be non-favorable. US 2007/154646 A1 discloses coating compositions comprising a styrene-containing, acrylic-based latex and an epoxysilane crosslinking agent.

## SUMMARY OF THE INVENTION

There is still the need to improve the properties of coatings containing aqueous polymer latexes as binders in terms of chemical resistance, especially against water and household chemicals. In particular, the modified aqueous polymer latex should be suitable as a binder or co-binder for industrial varnishes, in particular for furniture and door varnishes and result in good coating properties, such as high mechanical strength and good chemical resistance to water and household cleaners. At the same time, the polymer latex should be storage-stable, in particular against formation of coagulum and increase in viscosity, and show good filming properties.

Surprisingly, it was found that modifying polymer latexes of carboxyl groups bearing polymers by adding the epoxy functional silane compound to the polymer latex after polymerization at elevated temperatures of +60°C or higher e.g. at polymerization temperature or slightly below, results in improved durability and chemical resistances of coatings based on said aqueous polymer latexes.

Therefore, the present invention relates to a process for modifying an aqueous polymer latex of polymer particles that bear carboxyl groups, comprising at least one mixing step, where the aqueous polymer latex is mixed with at least one silane compound of the formula (1) at a temperature of at least 60°C.

$$(RO)_{3-n}R^1{}_nSiR^2X \qquad (1)$$

In formula (1) the variables R, n, $R^1$, $R^2$ and X have the following meanings:

- R is $C_1$-$C_{10}$-alkyl, $C_3$-$C_{10}$-cycloalkyl, $C_6$-$C_{10}$-aryl, $C_1$-$C_{10}$-alkoxy-$C_1$-$C_{10}$-alkyl, $C_2$-$C_{10}$-alkenyl, $C_1$-$C_4$-alkyl-$C_6$-$C_{10}$-aryl or $C_6$-$C_{10}$-aryl-$C_1$-$C_4$-alkyl
- $R^1$ is $C_1$-$C_{10}$-alkyl, $C_3$-$C_{10}$-cycloalkyl, $C_6$-$C_{10}$-aryl, $C_2$-$C_{10}$-alkenyl, $C_1$-$C_4$-alkyl-$C_6$-$C_{10}$-aryl or $C_6$-$C_{10}$-aryl-$C_1$-$C_4$-alkyl
- $R^2$ is a covalent chemical bond or a $C_1$-$C_{20}$-alkylene, in which non-adjacent methylene units can be replaced by O-groups,
- n is 0, 1, 2 or 3,
- X is a radical having 3 to 10 carbon atoms and bearing an oxirane group.

The present invention is associated with several benefits.

- The polymer latexes obtainable by the process of the invention are stable and provide a good and well balanced application profile to coating compositions.
- Due to the well-balanced application profile of the polymer latexes obtainable by the process of the invention, said polymer latexes are particularly useful as binders or co-binders in wood coatings.
- Coating compositions containing a polymer latex obtainable by the process of the invention as a binder or co-binder show a very good blocking resistance.
- Coating compositions containing a polymer latex obtainable by the process of the invention as a binder or co-binder provide good chemical resistance, especially against water and household chemicals.
- Coating compositions containing a polymer latex obtainable by the process of the invention as a binder or co-binder provide good weathering resistance, in particular against moisture, UV radiation, and improved whitening resistance.
- Coating compositions containing a polymer latex obtainable by the process of the invention as a binder or co-binder provide high durability.

Therefore, a second aspect of the present invention is a modified aqueous polymer latex which is obtainable by the process for modifying an aqueous polymer latex as described herein.

Further aspects of the invention relate to the use of the modified aqueous polymer latex as defined herein as binder or co-binder for industrial varnishes, in particular for varnishes for durable coatings of wooden substrates, such as coatings for furniture, windows, doors etc.

## DETAILED DESCRIPTION OF THE INVENTION

Here and throughout the specification, the term "aqueous polymer latex" refers to a dispersion of polymer particles in water and, therefore, the terms "aqueous polymer latex" and "aqueous polymer dispersion" are used

synonymously.

Here and throughout the specification, the term "carboxylated aqueous polymer latex" refers to an aqueous polymer latex of polymer particles that bear carboxyl groups.

Here and throughout the specification, the terms "wt.-%" and "% by weight" are used synonymously.

Here and throughout the specification, the term "(meth)acryl" includes both acryl and methacryl groups. Hence, the term "(meth)acrylate" includes acrylate and methacrylate and the term "(meth)acrylamide" includes acrylamide and methacrylamide.

Here and throughout the specification, the term "waterborne coating composition" means a liquid aqueous coating composition containing water as the continuous phase in an amount sufficient to achieve flowability.

Here and throughout the specification, the term "pphm" means parts by weight per 100 parts of monomers and corresponds to the relative amount in % by weight of a certain substance based on the total amount of monomers M.

Here and throughout the specification, the term "ethylenically unsaturated monomer" is understood to mean that the monomer has at least one C=C double bond, e.g. 1, 2, 3 or 4 C=C double bonds, which are radically polymerizable, i.e. which under the conditions of an aqueous radical emulsion polymerization process are polymerized to obtain a polymer having a backbone of carbon atoms. Here and throughout the specification, the term "monoethylenically unsaturated" is understood to mean that the monomer has a single C=C double bond which is susceptible to radical polymerization under conditions of an aqueous radical emulsion polymerization.

Here and throughout the specification, the terms "ethoxylated" and "polyethoxylated" are used synonymously and refer to compounds having an oligo- or polyoxyethylene group, which is formed by repeating units $O\text{-}CH_2CH_2$. In this context, the term "degree of ethoxylation" relates to the number average of repeating units $O\text{-}CH_2CH_2$ in these compounds.

Here and throughout the specification, the prefixes "$C_n$-$C_m$" used in connection with compounds or molecular moieties each indicate a range for the number of possible carbon atoms that a molecular moiety or a compound can have. The term "$C_1$-$C_n$ alkyl" denominates a group of linear or branched saturated hydrocarbon radicals having from 1 to n carbon atoms. The term "$C_n$/$C_m$ alkyl" denominates a mixture of two alkyl groups, one having n carbon atoms, while the other having m carbon atoms.

For example, the term "$C_1$-$C_{10}$ alkyl" denominates a group of linear or branched saturated hydrocarbon radicals having from 1 to 10 carbon atoms. Examples of alkyl include but are not limited to methyl, ethyl, n-propyl, isopropyl, n-butyl, sec-butyl, isobutyl, tert-butyl, 2-methylpropyl (isopropyl), 1,1-dimethylethyl (tert-butyl), pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl, isononyl, decyl, their isomers, in particular mixtures of isomers, such as "isononyl", "isodecyl".

The term "$C_5$-$C_{20}$-cycloalkyl" as used herein refers to an mono- or bicyclic cycloaliphatic radical which is unsubstituted or substituted by 1, 2, 3 or 4 methyl radicals, where the total number of carbon atoms of $C_5$-$C_{20}$-cycloalkyl ranges from 5 to 20. Examples of $C_5$-$C_{20}$-cycloalkyl include but are not limited to cyclopentyl, cyclohexyl, methylcyclohexyl, dimethylcyclohexyl, cycloheptyl, cyclooctyl, cyclododecyl, cyclohexadecyl, norbornyl (= bicyclo[2.2.1]heptyl) and isobornyl (= 1,7,7-trimethylbicyclo[2.2.1]heptyl).

The term "$C_5$-$C_{20}$-heterocycloalkyl" as used herein refers to a mono- or bicyclic cycloaliphatic radical as described for cycloalkyl, wherein 1 or 2 of the $CH_2$ groups are replaced by non-adjacent oxygen ring atoms, resulting in heterocycloaliphatic radicals. Examples of such radicals include but are not limited to oxolan-2-yl, oxolan-3-yl, oxan-2-yl, oxan-3-yl, oxan-4-yl, 1,3-dioxolan-2-yl, 1,3-dioxolan-4-yl, 2,2-dimethyl-1,3-dioxolan-4-yl, 1,4-dioxan-2-yl, 1,3-dioxan-2-yl, 1,3-dioxan-4-yl, 1,3-dioxan-5-yl, 2,2-dimethyl-1,3-dioxan-4-yl, 2,2-dimethyl-1,3-dioxan-5-yl.

The term "$C_5$-$C_{20}$-cycloalkylmethyl" as used herein refers to a $C_5$-$C_{20}$-cycloalkyl radical as defined herein, which is bound via a methylene group.

The term "$C_5$-$C_{20}$-heterocycloalkylmethyl" as used herein refers to a $C_5$-$C_{20}$-heterocycloalkyl radical as defined herein, which is bound via a methylene group.

The term "$C_6$-$C_{10}$-aryl" as used herein refers to an optionally substituted mono- or bicyclic aromatic substituent having 6 to 10 carbon atoms. Examples of $C_6$-$C_{10}$-aryl include but are not limited to phenyl, indanyl, 1- or 2-naphthyl.

The term "alkoxyalkyl" as used herein refers to a saturated, straight-chain or singly, doubly, or triply branched hydrocarbon chain interrupted by an oxygen atom. The term "$C_1$-$C_{10}$-alkoxy-$C_1$-$C_{10}$-alkyl" denominates a hydrocarbon chain as described above which has from 1 to 10 carbon atoms and which can have interruptions by an oxygen atom covalently bonded to alkyl group having from 1 to 10 carbon atoms. Examples thereof include but are not limited to methoxylmethyl, ethoxymethyl, propoxymethyl, isopropoxymethyl, propoxyethyl, butoxyethyl, pentoxyethyl, hexyloxyethyl, heptyloxyethyl, octyloxyethyl, nonyloxyethyl, 3-(3-ethylhexyloxy)ethyl, 3-(2,4,4-trimethylpentyloxy)ethyl, 3-(1-ethyl-3-methylbutoxy)ethyl, ethoxypropyl, propoxypropyl, butoxypropyl, pentoxypropyl, hexyloxypropyl, heptyloxypropyl, octyloxypropyl, nonyloxypropyl, 3-(3-ethylhexyloxy)propyl, 3-(2,4,4-tri-methylpentyloxy)propyl, 3-(1-ethyl-3-methylbutoxy)propyl, ethoxybutyl, propoxybutyl, butoxybutyl, pentoxybutyl, hexyloxybutyl, heptyloxybutyl, octyloxybutyl, nonyloxybutyl, 3-(3-ethylhexyloxy)butyl, 3-(2,4,4-trimethylpentyloxy)butyl, 3-(1-ethyl-3-methylbutoxy)butyl, methoxypentyl, ethoxypentyl, propoxypentyl, butoxypentyl, pentoxypentyl, hexyloxypentyl, heptyloxypentyl, 3-(3-methylhexyloxy)pentyl, 3-(2,4-di-methylpentyloxy)pentyl, 3-(1-ethyl-3-methylbutoxy)pentyl.

The term "$C_2$-$C_{10}$-alkenyl" as used herein refers to a straight-chain or branched hydrocarbon radical having from 2 to 10 carbon atoms and one or more carbon-carbon double bonds, e.g., 1, 2, 3, or 4 double bonds. The one or more carbon-carbon double bonds can be internal, such as in 2-butenyl, or terminal, such as in 1-butenyl. Unless otherwise specified, each instance of an alkenyl group is independently unsubstituted or substituted with one or more substituents. Examples of $C_2$-$C_{10}$-alkenyl include but are not limited to ethenyl, 1- or 2-propenyl, 1- or 2-butenyl, butadienyl, pentenyl, pentadienyl, hexenyl, heptenyl, octenyl, octatrienyl, nonenyl, decenyl.

The term $C_2$-$C_{10}$-alkylene denominates a bivalent linear or branched saturated hydrocarbon radical having from 2 to 10 carbon atoms, in particular 2 to 6 or 2 to 4 carbon atoms ($C_2$-$C_6$-alkylene and $C_2$-$C_4$-alkylene, respectively) such as ethanediyl, propanediyl and butanediyl, where the radicals, which are bound to $C_2$-$C_4$-alkylene, are preferably bound not to the same carbon atoms of $C_2$-$C_{10}$-alkylene, such as in 1,2-ethanediyl, 1,2-propanediyl, 1,2-butanediyl, 2,3-butanediyl, 2-methyl-1,2-propanediyl, 1,3-propanediyl, 1,4-butanediyl, 1,3-butandiyl, 2-methyl-1,3-propandiyl, 1,5-pentandiyl, 1,5-hexandiyl.

The term "alkylaryl" as used herein refers to an optionally substituted aryl group attached to an optionally substituted alkyl group that is the point of attachment for the next substituent. The term "$C_1$-$C_4$-alkyl-$C_6$-$C_{10}$-aryl" denominates an aryl group as described above and which has from 6 to 10 carbon atoms and bears an alkyl group as described above, which has from 1 to 4 carbon atoms. Examples thereof include but are not limited to tolyl, xylyl, ethylphenyl, propylphenyl, isopropylphenyl, tert-butylphenyl, 2-methylnaphthyl.

The term "arylalkyl" as used herein refers to an optionally substituted alkyl group attached to an optionally substituted aryl group that is the point of attachment for the next substituent. The term "$C_6$-$C_{10}$-aryl-$C_1$-$C_4$-alkyl" denominates an alkyl group as described above, which has from 1 to 4 carbon atoms and bears an aryl group as described above, which has from 6 to 10 carbon atoms. Examples thereof include but are not limited to benzyl, 1- or 2-phenethyl, 1-, 2- or 3-phenylpropyl, 1-, 2-, 3-, or 4-phenylbutyl and 1- or 2-naphthylmethyl.

Preferably, the carboxylated polymer latex is mixed with at least one silane compound at a temperature of at least 60°C, in the range of 60 to 100°C, preferably in the range of 70 to 90°C, more preferably in the range of 75 to 85°C.

Preferably, R in formula (1) is $C_1$-$C_6$-alkyl, cyclohexyl, phenyl, $C_1$-$C_2$-alkoxy-$C_2$-$C_3$-alkyl, or benzyl with preference given to $C_1$-$C_6$-alkyl. In particular, R in formula (1) is $C_1$-$C_3$-alkyl, more preferably, methyl or ethyl.

If present, $R^1$ in formula (1) is preferably $C_1$-$C_6$-alkyl, phenyl or cyclohexyl, in particular $C_1$-$C_3$-alkyl. Especially, $R^1$ is methyl or ethyl.

Preferably, $R^2$ in formula (1) is a chemical bond or $C_1$-$C_6$-alkylene, more preferably methylene ($CH_2$), 1,2-ethandiyl, 1,1-ethandiyl, 1,2-propandiyl, 1,3-propandiyl or 1,4-butandiyl.

Preferably, n in formula (1) is 0 or 1, especially 0.

In particular, X in formula (1) is selected from the group consisting of glycidyl, glycidyloxy and epoxy-$C_4$-$C_{10}$-cycloalkyl, such as epoxycyclohexyl.

Examples of the silane of formula (1) include but are not limited to (3-glycidoxypropyl)triethoxysilane, (3-glycidoxypropyl)trimethoxysilane, 2-(3,4-epoxycyclohexyl)ethyltriethoxysilane, 2-(3,4-epoxycyclohexyl)ethyltrimethoxysilane, (3-glycidoxypropyl)methyldiethoxysilane, (3-glycidoxypropyl)methyldimethoxysilane, (3-glycidoxypropyl)dimethylethoxysilane, 5,6-epoxyhexyltriethoxysilane and mixtures thereof.

In a preferred group of embodiments, the silane of formula (1) is selected from the group of glycidoxyalkyltrialkoxysilanes, i.e. compounds where n = 0, $R^2$ = alkylene and X = glycidyloxy, i.e. O-$CH_2$-(oxiran-2-yl).

The silanes of formula (1) are used in amounts of 0.1 to 20% by weight, preferably 0.5 to 15% by weight, particularly preferably 1 to 10% by weight, based on the total weight of the polymer particles in the aqueous polymer latex.

The silanes of formula (1) used in accordance with the invention are commercially available products or can be prepared by conventional methods, for example by processes as described in Noll, Chemie und Technologie der Silikone, 2nd edition 1968, Weinheim, and in Houben-Weyl, Methoden der organischen Chemie, volume E20, Georg Thieme Verlag, Stuttgart (1987). The silanes of formula (1) mentioned can be used alone or as a mixture.

Commercially available (3-glycidoxypropyl)trimethoxysilane, also termed gamma-glycidoxypropyl trimethoxysilane or GLYMO, is Silquest® A-187 from Momentive Performance Materials, Geniosil® GF 80 from Wacker, SIG5840.0 from Gelest or Silane Coupling Agent KH-560 from Zhejiang Feidian Chemical. Commercially available (3-glycidoxypropyl)triethoxysilane, also termed gamma-glycidoxypropyl triethoxysilane, is Silquest® A-1871 from Momentive Performance Materials, Geniosil® GF 82 from Wacker or SIG5839.0 from Gelest. Commercially available (3-glycidoxypropyl)methyldiethoxysilane is WetLink® 78 from Momentive Performance Materials or SIG5832.0 from Gelest. Commercially available 5,6-epoxyhexyltriethoxysilane is SIE4675.0 from Gelest. Commercially available 2-(3,4-epoxycyclohexyl)ethyltrimethoxysilane, also termed beta-(3,4-epoxycyclohexyl)ethyl trimethoxysilane, is Silquest® A-186 from Momentive Performance Materials or SIE4670.0 from Gelest. Commercially available 2-(3,4-epoxycyclohexyl)ethyltriethoxysilane, also termed beta-(3,4-epoxycyclohexyl)ethyl triethoxysilane, is CoatOSil® 1770 from Momentive Performance Materials or SIE4668.0 from Gelest.

The molar ratio of the oxirane group of the silane of formula (1) to the carboxyl group of the polymer particles in the aqueous polymer latex is in the range of 1:1 to 1:20, preferably in the range of 1:2 to 1:15, more preferably in the range of 1:3 to 1:10, especially in the range of 1:4 to 1:5.

According to the invention, the polymer latex is a carboxylated polymer latex, i.e. a polymer latex, wherein the polymers of the polymer latex bear carboxyl groups. The carboxyl groups typically stem from polymerized monomers which bear at least one carboxyl group. The polymers of the polymer latex may be polyesters, polyamides, polyurethanes, including polyesterurethanes and polyetherurethanes, polyesteramides and polymers made of polymerized ethylenically unsaturated monomers.

The polymer of the carboxylated polymer latexes is preferably a polymer made of polymerized ethylenically unsaturated monomers, hereinafter monomers M, which comprise polymerized units of at least one monoethylenically unsaturated carboxylic acid, hereinafter also termed as monomer M1. Besides the monomers M1, the monomers M forming the polymer of the polymer latex typically comprise at least one ethylenically unsaturated monomer M2 which is sparingly water-soluble. As the polymerized monomers form the polymer latex particles, it is apparent that the following statements with regard to the kind of monomers comprised by the monomers M and their relative amounts of the different monomers M will also apply to the composition of polymer latex particles.

The term "sparingly water-soluble" in general and in particular with regard to ethylenically unsaturated monomers M2 is well understood to mean that the respective material, in particular the monomer M2, has a solubility in deionized water at 20°C and 1 bar of at most 60 g/L, in particular at most 45 g/L, e.g. in the range of 0.001 to 60 g/L, in particular in the range of 0.01 to 45 g/L.

Generally, the monomers M1 are selected from the group consisting of monoethylenically unsaturated monocarboxylic acids having 3 to 6 carbon atoms and monoethylenically unsaturated dicarboxylic acids having 4 to 6 carbon atoms.

For example, suitable monomers M1 include but are not limited to

- monoethylenically unsaturated monocarboxylic acids having 3 to 6 carbon atoms, such as acrylic acid, methacrylic acid, crotonic acid, 2-ethylpropenoic acid, 2-propylpropenoic acid, 2-acryloxyacetic acid and 2-methacryloxyacetic acid;
- monoethylenically unsaturated dicarboxylic acids having 4 to 6 carbon atoms, such as itaconic acid, mesaconic acid, citraconic acid and fumaric acid.

Amongst the aforementioned monomers M1, preference is given to monoethylenically unsaturated monocarboxylic acids. Particular preference is given to acrylic acid, methacrylic acid and mixtures thereof. In a particular group of embodiments, the monomer M1 comprises methacrylic acid. Especially, the monomer M1 is methacrylic acid or a mixture of acrylic acid and methacrylic acid.

The total amount of monomers M1 is generally from 0.1 to 10% by weight, in particular from 0.2 to 8% by weight, preferably from 0.3 to 7% by weight, especially from 0.5 to 5% by weight, based on the total weight of the monomers M which form the polymer of the polymer latex.

Suitable monomers M2 are preferably monoethylenically unsaturated or may also have a two conjugated double bond. Examples of ethylenically unsaturated monomers M2 include but are not limited to

- $C_1$-$C_{20}$-alkyl esters of monoethylenically unsaturated monocarboxylic acids, such as acrylic acid or methacrylic acid;
- $C_5$-$C_{20}$-cycloalkyl esters of monoethylenically unsaturated monocarboxylic acids, such as acrylic acid or methacrylic acid;
- Vinylaromatic monomers, in particular monovinyl benzene, where the benzene ring is unsubstituted or substituted by 1, 2 or 3 substituents selected from chlorine and $C_1$-$C_4$ alkyl;
- Vinylesters of $C_1$-$C_{20}$ alkanoic acids; and
- Olefines and conjugated diolefines having 2 to 6 carbon atoms.

Suitable $C_1$-$C_{20}$-alkyl esters of monoethylenically unsaturated monocarboxylic acids are in particular the $C_1$-$C_{20}$-alkyl esters of acrylic and the $C_1$-$C_{20}$-alkyl esters of methacrylic acid.

Suitable $C_1$-$C_{20}$-alkyl esters of acrylic acid include but are not limited to methyl acrylate, ethyl acrylate, n-propyl acrylate, isopropyl acrylate, n-butyl acrylate, sec-butyl acrylate, isobutyl acrylate, tert-butyl acrylate, n-pentyl acrylate, isopentyl acrylate, n-hexyl acrylate, n-octyl acrylate, 2-ethylhexyl acrylate, n-decyl acrylate, isodecyl acrylate, 2-propylheptyl acrylate, lauryl acrylate, $C_{12}$/$C_{14}$-alkyl acrylate, $C_{12}$-$C_{15}$-alkyl acrylate, isotridecyl acrylate, $C_{16}$/$C_{18}$-alkyl acrylate and stearyl acrylate.

Suitable $C_1$-$C_{20}$-alkyl esters of methacrylic acid include but are not limited to

- $C_1$-$C_4$-alkyl esters of methacrylic acid, such as methyl methacrylate, ethyl methacrylate, n-propyl methacrylate, isopropyl methacrylate, n-butyl methacrylate, sec-butyl methacrylate, isobutyl methacrylate and tert-butyl methacrylate; and
- $C_5$-$C_{20}$-alkyl esters of methacrylic acid, such as n-pentyl methacrylate, n-hexyl methacrylate, n-octyl methacrylate, 2-ethylhexyl methacrylate, n-decyl methacrylate, 2-propylheptyl methacrylate, lauryl methacrylate, $C_{12}/C_{14}$-alkyl methacrylate, $C_{12}$-$C_{15}$-alkyl methacrylate, isotridecyl methacrylate, $C_{16}/C_{18}$-alkyl methacrylate and stearyl methacrylate;

and mixtures thereof.

Suitable $C_5$-$C_{20}$-cycloalkyl esters of monoethylenically unsaturated monocarboxylic acids are in particular the $C_5$-$C_{20}$-cycloalkyl esters of acrylic and the $C_5$-$C_{20}$-cycloalkyl esters of methacrylic acid. Suitable $C_5$-$C_{20}$-cycloalkyl esters of acrylic acid include but are not limited to cyclohexylacrylate, norbornylacrylate and isobornylacrylate. Suitable $C_5$-$C_{20}$-cycloalkyl esters of methacrylic acid include but are not limited to cyclohexyl methacrylate, norbornyl methacrylate and isobornyl methacrylate.

Suitable vinyl aromatic monomers include but are not limited to mono-vinyl substituted aromatic hydrocarbons such as styrene, 2-methylstyrene, 4-methylstyrene, 2-n-butylstyrene, 4-n-butylstyrene, 4-n-decylstyrene and $\alpha$-methylstyrene, with particular preference given to styrene.

Examples of suitable olefins and conjugated diolefines include ethene, propene, 1-butene, isobutene, 1-pentene, 1-hexene, butadiene and isoprene.

Examples of suitable vinylesters of $C_1$-$C_{20}$ alkanoic acids include vinyl acetate, vinyl propionate, vinyl butyrate, vinyl versatate, i.e. vinylesters of versatic acids such as pivalic acid, 2,2-dimethylbutanoic acid or neodecanoic acid, vinyl laurate, vinyl palmitate and vinyl stearate.

The monomers M2 are preferably selected from the group consisting of $C_1$-$C_{20}$-alkyl esters of acrylic acid, $C_5$-$C_{20}$-cycloalkyl esters of acrylic acid, $C_1$-$C_{20}$-alkyl esters of methacrylic acid, $C_5$-$C_{20}$-cycloalkyl esters of methacrylic acid and monovinyl aromatic monomers.

In particular, monomers M2 are selected from the group consisting of

- $C_2$-$C_{10}$-alkyl esters of acrylic acid,
  in particular ethyl acrylate, n-butyl acrylate, isbutyl acrylate, tert-butyl acrylate, isopentyl acrylate, n-hexyl acrylate, n-octyl acrylate, 2-ethylhexyl acrylate, 2-propylheptyl acrylate and mixtures thereof, such as for example mixtures of n-butyl acrylate and 2-ethylhexylacrylate or mixtures of n-butyl acrylate and ethyl acrylate or mixtures of ethyl acrylate, n-butyl acrylate and 2-ethylhexyl acrylate or mixtures of n-butyl acrylate, isobutyl acrylate and 2-ethylhexyl acrylate;
- $C_1$-$C_4$-alkyl esters of methacrylic acid,
  in particular methyl methacrylate, ethyl methacrylate, n-butyl methacrylate and isobutyl methacrylate; and
- monovinyl aromatic monomers, especially styrene.

More preferably, the monomers M2 are a combination of

- at least one monomer M2a, selected from $C_2$-$C_{20}$-alkyl esters of acrylic acid and $C_5$-$C_{20}$-alkyl esters of methacrylic acid; and
- at least one monomer M2b, selected from monovinyl aromatic monomers, and $C_1$-$C_4$-alkyl esters of methacrylic acid and mixtures thereof.

More particularly, the monomers M2 are a mixture of

- at least one monomer M2a, selected from $C_2$-$C_{10}$-alkyl esters of acrylic acid, such as ethyl acrylate, n-butyl acrylate, isobutyl acrylate, isopentyl acrylate, n-hexyl acrylate, n-octyl acrylate, 2-ethylhexyl acrylate, 2-propylheptyl acrylate and mixtures thereof; and
- at least one monomer M2b, selected from monovinyl aromatic monomers, such as styrene, and $C_1$-$C_4$-alkyl esters of methacrylic acid, such as methyl methacrylate, n-butyl methacrylate, isobutyl methacrylate and mixtures thereof.

Especially, the monomers M2 are a mixture of

- at least one monomer M2a, selected from $C_2$-$C_{10}$-alkyl esters of acrylic acid; and
- at least one monomer M2b, selected from styrene, methyl methacrylate, n-butyl methacrylate and isobutyl methacrylate and mixtures thereof.

Preference is given to monomers M2 which comprise less than 20%, in particular not more than 10% by weight,

based on the total amount of monomers M, of monovinyl aromatic monomers. In particular, the monomers M2 do not contain vinyl aromatic monomers at all.

In the mixtures of monomers M2a and M2b, the relative amount of M1a and M1b may vary in particular from 10:1 to 1:10, more particularly from 5:1 to 1:5, especially from 3:1 to 1:3. The ratio of monomers M1a to M1b will affect the glass transition temperature and a proper mixture will result in the desired glass transition temperatures.

The total amount of monomers M2 is frequently from 80 to 99.9% by weight or from 80 to 99.8% by weight or from 80 to 99.7% by weight or from 80 to 99.5% by weight, in particular from 85 to 99.8% by weight or from 85 to 99.7% by weight or from 85 to 99.5% by weight and especially from 90 to 99.8% by weight or from 90 to 99.7% by weight or from 90 to 99.5% by weight, based on the total weight of the monomers M.

Optionally, the monomers M may further comprise at least one ethylenically unsaturated monomer M3 which is different from the monomers M1 and M2. The total amount of monomers M3 will usually not exceed 20% by weight, in particular 15% by weight, especially 10% by weight or 5% by weight, based on the total amount of monomers M. In particular, the total amount of monomers M3, if present, is generally from 0.05 to 20% by weight, in particular from 0.1 to 15% by weight, preferably from 0.2 to 10% by weight, especially from 0.3 to 5% by weight, based on the total weight of the monomers M.

Suitable monomers M3 are non-ionic monoethylenically unsaturated monomers M3', which preferably have a functional group selected from hydroxyalkyl groups, in particular hydroxy-$C_2$-$C_4$-alkyl group, a primary carboxamide group, epoxy groups, urea groups and keto groups.

The total amount of monomers M3' will usually not exceed 20% by weight, in particular 15% by weight, especially 10% by weight or 5% by weight, based on the total amount of monomers M. In particular, the total amount of monomers M3', if present, is generally from 0.05 to 20% by weight, in particular from 0.1 to 15% by weight, preferably from 0.2 to 10% by weight, especially from 0.3 to 5% by weight, based on the total weight of the monomers M.

Examples for monomers M3' having a carboxamide group (hereinafter monomers M3a) include but are not limited to primary amides of monoethylenically unsaturated monocarboxylic acids having 3 to 6 carbon atoms, such as acrylamide and methacrylamide.

Examples for monomers M3' having a urea group (hereinafter monomers M3b) are the $C_1$-$C_4$-alkyl esters of acrylic acid or methacrylic acid and the N-$C_1$-$C_4$-alkyl amides of acrylic acid or methacrylic acid, where the $C_1$-$C_4$-alkyl group bears an urea group or a 2-oxoimidazolin group such as 2-(2-oxo-imidazolidin-1-yl)ethyl acrylate, 2-(2-oxo-imidazolidin-1-yl)ethyl methacrylate, which are also termed 2-ureido acrylate and 2-ureido methacrylate, respectively, N-(2-acryloxyethyl)urea, N-(2-methacryloxyethyl)urea, N-(2-(2-oxo-imidazolidin-1-yl)ethyl) acrylamide, N-(2-(2-oxo-imidazolidin-1-yl)ethyl) methacrylamide, as well as allyl or vinyl substituted ureas and allyl or vinyl substituted 2-oxoimidazolin compounds such as 1-allyl-2-oxoimidazolin, N-allyl urea and N-vinylurea.

Examples for monomers M3' having a keto group (hereinafter monomers M3c) are the

- $C_2$-$C_8$-oxoalkyl esters of acrylic acid or methacrylic acid and the N-$C_2$-$C_8$-oxoalkyl amides of acrylic acid or methacrylic acid, such as diacetoneacrylamide (DAAM), and diacetonemethacrylamide, and
- $C_1$-$C_4$-alkyl esters of acrylic acid or methacrylic acid and the N-$C_1$-$C_4$-alkyl amides of acrylic acid or methacrylic acid, where the $C_1$-$C_4$-alkyl group bears a 2-acetylacetoxy group of the formula O-C(=O)-$CH_2$-C(=O)-$CH_3$ (also termed acetoacetoxy group), such as acetoacetoxyethyl acrylate, acetoacetoxypropyl methacrylate, acetoacetoxybutyl methacrylate and 2-(acetoacetoxy)ethyl methacrylate.

Examples for monomers M3' having a hydroxy-$C_2$-$C_4$-alkyl group (hereinafter monomers M3d) are the hydroxy-$C_2$-$C_4$-alkyl esters of monoethylenically unsaturated monocarboxylic acids having 3 to 6 carbon atoms, in particular the hydroxy-$C_2$-$C_4$-alkyl esters of acrylic acid and the hydroxy-$C_2$-$C_4$-alkyl esters of methacrylic acid, such as 2-hydroxyethyl acrylate, 2-hydroxypropyl acrylate, 3-hydroxylpropyl acrylate, 2-hydroxybutyl acrylate, 4-hydroxybutyl acrylate, 2-hydroxyethyl methacrylate, 2-hydroxypropyl methacrylate, 3-hydroxylpropyl methacrylate, 2-hydroxybutyl methacrylate and 4-hydroxybutyl methacrylate.

Suitable monomers M3' may also include monoethylenically unsaturated monomers bearing at least one epoxy group (hereinafter monomers M3e), in particular a glycidyl group such as glycidyl acrylate and glycidyl metharylate.

The monomers M3 may also include ethylenically unsaturated monomers M3" which are different from monoethylenically unsaturated monomers M3'. In particular, monomers M3" may be monoethylenically unsaturated monomers having a sulfonic acid, phosphonic acid or phosphoric acid group (monomers M3f) and multiethylenically unsaturated monomers (monomers M3g).

Suitable monomers M3f include but are not limited to

- monoethylenically unsaturated sulfonic acids, such as vinylsulfonic acid, allylsulfonic acid, styrenesulfonic acid, 2-acrylamido-2-methylpropane sulfonic acid,
- monoethylenically unsaturated phosphonic acids such as vinylphosphonic acid, allylphosphonic acid, styrenephosphonic acid and 2-acrylamido-2-methylpropane phosphonic acid, and

- monoethylenically unsaturated phosphoric acids such as monophosphates of hydroxyalkyl acrylates, monophosphates of hydroxyalkyl methacrylates, monophosphates of alkoxylated hydroxyalkyl acrylates and monophosphates of alkoxylated hydroxyalkyl methacrylates.

The amount of monomers M3f, if present, will usually not exceed 2 pphm, and frequently be in the range from 0.01 to 2 pphm.

The monomers M may also include multiethylenically unsaturated monomers (monomers M3g), i.e. monomers having at least two non-conjugated ethylenically unsaturated double bounds. The amounts of said monomers M3g will generally not exceed 1 pphm based on the amount of monomers forming the polyfunctional polymer.

Examples of multiethylenically unsaturated monomers M3g include:

- diesters of monoethylenically unsaturated $C_3$-$C_6$ monocarboxylic acids with saturated aliphatic or cycloaliphatic diols, in particular diesters of acrylic acid or methacrylic acid, such as the diacrylates and the dimethacrylates of ethylene glycol (1,2-ethanediol), propylene glycol (1,2-propanediol), 1,2-butanediol, 1,3-butanediol, 1,4-butanediol, neopentyl glycol (2,2-dimethyl-1,3-propanediol), 1,6-hexanediol and 1,2-cyclohexanediol;
- monoesters of monoethylenically unsaturated $C_3$-$C_6$ monocarboxylic acids with monoethylenically unsaturated aliphatic or cycloaliphatic monohydroxy compounds, such as the acrylates and the methacrylates of vinyl alcohol (ethenol), allyl alcohol (2-propen-1-ol), 2-cyclohexen-1-ol or norbornenol, such as allyl acrylate and allyl methacrylate; and
- divinyl aromatic compounds, such as 1,3-divinyl benzene or1,4-divinyl benzene.

In particular, the monomers M3 are selected from monomers M3a, i.e. primary amides of monoethylenically unsaturated monocarboxylic acids, in particular acrylamide and methacrylamide, monomers M3b having a urea group, especially 2-ureido acrylate, 2-ureido methacrylate, and mixtures thereof and monomers M3c bearing a carbonyl group, especially diacetoneacrylamide (DAAM), diacetonemethacrylamide and mixtures thereof.

In a preferred group of embodiments, the monomers M comprise at least one ethylenically unsaturated monomer which is capable of being crosslinked by a post crosslinking agent. Suitable monomers which are capable of being crosslinked by a post crosslinking agent are the monomers M3', in particular, the monomers M3b, M3c, M3d and M3f. Particular preference is given to monomers M3b and M3c. The total amount of said post-crosslinkable monomers is typically in the range of 0.1 to 10% by weight, preferably from 0.2 to 8% by weight, especially from 0.3 to 5% by weight, based on the total weight of the monomers M. Besides said post-crosslinkable monomers other monomers M3 may be present.

In particular the monomers M comprise or consist of:

- 0.1 to 10% by weight, in particular from 0.2 to 8% by weight, preferably from 0.3 to 7% by weight, especially from 0.5 to 5% of one or more monomers M1;
- 80 to 99.9% by weight or from 80 to 99.8% by weight or from 80 to 99.7% by weight or from 80 to 99.5% by weight, in particular from 85 to 99.8% by weight or from 85 to 99.7% by weight or from 85 to 99.5% by weight and especially from 90 to 99.8% by weight or from 90 to 99.7% by weight or from 90 to 99.5% by weight, based on the total weight of the monomers M, of one or more monomers M2;
- 0 to 19.9% by weight, e.g. from 0.05 to 19.9% by weight, in particular from 0.1 to 14.9% by weight or from 0.1 to 14.8% by weight or from 0.1 to 14.5% by weight, preferably from 0.2 to 9.8% by weight or from 0.2 to 9.5% by weight, especially from 0.5 to 4.9% by weight or from 0.5 to 4.8% by weight or from 0.5 to 4.5% by weight, based on the total weight of the monomers contained in the monomer composition M, of one or more monomers M3, which is preferably selected from the group consisting of monomers M3a, M3b and M3c and combinations thereof.

A particular group of embodiments of the invention relates to polymer latexes as defined herein, wherein at least some of the carbon atoms of the monomers M2 are of biological origin, i.e. they are at least partly made of bio-carbon. In particular, aliphatic carboxylic acids used for the vinyl ester monomers or the alcohols used for the production of the alkyl and cycloalkylester monomers M2 preferably have a content of bio-carbon of at least 90%, based on the total amount of carbon atoms in the respective alkanol, cycloalkanol or aliphatic carboxylic acid, respectively. This content is advantageously higher, in particular greater than or equal to 95%, preferably greater than or equal to 98% and advantageously equal to 100%, based on the total amount of carbon atoms in the respective monomer. Similarly, acrylic acid may be produced from renewable materials. However, acrylic acid produced from biomaterials is not available on large scale so far. Consequently, the monomers M2 have a content of bio-carbon of preferably at least 40%, more preferably at least 50%, in particular at least 55% and especially at least 57%, based on the total amount of carbon atoms in the respective monomer. By using such monomers M2, which are at least partly of biological origin, the demand of fossil carbon in the

polymer latex can be significantly reduced. In particular, the amount of carbon of biological origin of at least 10%, in particular at least 15% or at least 20% or higher, e.g. 30% or 40% or higher can be achieved.

The term "bio-carbon" indicates that the carbon is of biological origin and comes from a biomaterial/renewable resources. The content in bio-carbon and the content in biomaterial are expressions that indicate the same value. A material of renewable origin or biomaterial is an organic material wherein the carbon comes from the $CO_2$ fixed recently (on a human scale) by photosynthesis from the atmosphere. A biomaterial (carbon of 100% natural origin) has an isotopic ratio $^{14}C/^{12}C$ greater than $10^{-12}$, typically about $1.2\times10^{-12}$, while a fossil material has a zero ratio. Indeed, the isotopic $^{14}C$ is formed in the atmosphere and is then integrated via photosynthesis, according to a time scale of a few tens of years at most. The half-life of the $^{14}C$ is 5,730 years. Thus, the materials coming from photosynthesis, namely plants in general, necessarily have a maximum content in isotope $^{14}C$. The determination of the content of biomaterial or of bio-carbon can be carried out in accordance with the standards ASTM D 6866-12, the method B (ASTM D 6866-06) and ASTM D 7026 (ASTM D 7026-04).

In the polymer latex the polymer bearing carboxyl groups is present in the form of polymer particles. Preferably, the particles of the polymer contained in the polymer latex have a Z-average particle diameter, as determined by QELS, in the range from 30 to 500 nm, in particular in the range from 40 to 450 nm. The particle size distribution of the copolymer particles contained in the polymer latex may be monomodal or almost monomodal, which means that the distribution function of the particle size has a single maximum and no particular shoulder. The particle size distribution of the copolymer particles contained in the polymer latex may also be polymodal or almost polymodal, which means that the distribution function of the particle size has at least two distinct maxima or at last one maximum and at least a pronounced shoulder.

If not stated otherwise, the size of the particles as well as the distribution of particle size is determined by quasielastic light scattering (QELS), also known as dynamic light scattering (DLS). The measurement method is described in the ISO 13321:1996 standard. The determination can be carried out using a High-Performance Particle Sizer (HPPS). For this purpose, a sample of the aqueous polymer latex will be diluted and the dilution will be analyzed. In the context of QELS, the aqueous dilution may have a polymer concentration in the range from 0.001 to 0.5% by weight, depending on the particle size. For most purposes, a proper concentration will be 0.01% by weight. However, higher or lower concentrations may be used to achieve an optimum signal/noise ratio. The dilution can be achieved by addition of the polymer latex to water or an aqueous solution of a surfactant in order to avoid flocculation. Usually, dilution is performed by using a 0.1% by weight aqueous solution of a non-ionic emulsifier, e.g. an ethoxylated C16/C18 alkanol (degree of ethoxylation of 18), as a diluent. Measurement configuration: HPPS from Malvern, automated, with continuous-flow cuvette and Gilson autosampler. Parameters: measurement temperature 20.0 °C; measurement time 120 seconds (6 cycles each of 20 s); scattering angle 173°; wavelength laser 633 nm (HeNe); refractive index of medium 1.332 (aqueous); viscosity 0.9546 mPa·s. The measurement gives an average value of the second order cumulant analysis (mean of fits), i.e. Z average. The "mean of fits" is an average, intensity-weighted hydrodynamic particle diameter in nm.

The hydrodynamic particle diameter can also be determined by Hydrodynamic Chromatography fractionation (HDC), as for example described by H. Wiese, "Characterization of Aqueous Polymer Dispersions" in Polymer Dispersions and Their Industrial Applications (Wiley-VCH, 2002), pp. 41-73. For further details, reference is made to the examples and the description below.

In a particular group of embodiments, the particles of the copolymer contained in the polymer latex have a Z-average particle diameter, as determined by QELS, in the range from 30 to 200 nm, in particular in the range from 40 to 150 nm. In this particular group of embodiments, the particle size distribution of the copolymer particles contained in the polymer latex is in particular monomodal or almost monomodal, which means that the distribution function of the particle size has a single maximum.

In another particular group of embodiments, the particles of the copolymer contained in the polymer latex have a Z-average particle diameter, as determined by QELS, in the range from 150 to 500 nm, in particular in the range from 200 to 400 nm. In this particular group of embodiments, the particle size distribution of the copolymer particles contained in the polymer latex is in particular polymodal, in particular bimodal, which means that the distribution function of the particle size has at least two maxima. Usually, the particle size distribution, as determined by QELS, of the polymer particles in the polymer dispersion obtainable by the process as described herein has a first maximum in the range of 30 to 150 nm and a second maximum in the range of 200 to 500 nm. Preferably, said first maximum is in the range of 50 to 130 nm and said second maximum is in the range of 200 to 400 nm.

The polymer of the polymer latex may form a single phase or it may form different phases, if the polymer particles contain different copolymers, which differ with regard to their monomer composition. Preferably, the polymer particles contained in the aqueous polymer latex of the present invention comprise at least one phase, where the copolymer has a glass transition temperature Tg which does not exceed 50°C, e.g. in the range from -80 to +50°C, in particular in the range from -30 to +45°C.

The glass transition temperatures as referred to herein are the actual glass transition temperatures. The actual glass transition temperature can be determined experimentally by the differential scanning calorimetry (DSC) method according to ISO 11357-2:2013, preferably with sample preparation according to ISO 16805:2003.

According to a particular preferred group of embodiments of the invention, the polymer particles contained in the aqueous polymer latex of the present invention, comprise a polymer phase (1), which has a glass transition temperature Tg(1) in the range from -80 to +50°C, in particular in the range from -30 to +45°C and a further polymer phase (2), which has a glass transition temperature Tg(2) of at least +50°C, e.g. in the range from +50 to +180°C, in particular in the range from +60 to +150°C, provided that the temperature difference ITg(2) - Tg(1)I is at least 10°C, in particular at least 20°C, especially at least 40°C, i.e., the absolute value of |Tg(2) - Tg(1)| is at least 10°C , in particular at least 20°C, especially at least 40°C.

The actual glass transition temperature depends on the monomer compositions forming the respective polymer phases (1) and (2), respectively, and a theoretical glass transition temperature can be calculated from the monomer composition used in the emulsion polymerization. The theoretical glass transition temperatures are usually calculated from the monomer composition by the Fox equation:

$$1/Tg^t = x_a/Tg_a + x_b/Tg_b + .... x_n/Tg_n,$$

In this equation, $x_a$, $x_b$, .... $x_n$ are the mass fractions of the monomers a, b, .... n, and $Tg_a$, $Tg_b$, .... $Tg_n$ are the actual glass transition temperatures in Kelvin of the homopolymers synthesized from only one of the monomers 1, 2, .... n at a time. The Fox equation is described by T. G. Fox in Bull. Am. Phys. Soc. 1956, 1, page 123 as well as in Ullmann's Encyclopädie der technischen Chemie [Ullmann's Encyclopedia of Industrial Chemistry], vol. 19, p. 18, 4th ed., Verlag Chemie, Weinheim, 1980. The actual Tg values for the homopolymers of most monomers are known and listed, for example, in Ullmann's Encyclopädie der technischen Chemie [Ullmann's Encyclopedia of Industrial Chemistry], 5th ed., vol. A21, p. 169, Verlag Chemie, Weinheim, 1992. Further sources of glass transition temperatures of homopolymers are, for example, J. Brandrup, E. H. Immergut, Polymer Handbook, 1st Ed., J. Wiley, New York 1966, 2nd Ed. J. Wiley, New York 1975, 3rd Ed. J. Wiley, New York 1989 and 4th Ed. J. Wiley, New York 2004.

Usually, the theoretical glass temperature $Tg^t$ calculated according to Fox as described herein and the experimentally determined glass transition temperature as described herein are similar or even same and do not deviate from each other by more than 5 K, in particular they deviate not more than 2 K. Accordingly, both the actual and the theoretical glass transition temperatures of the polymer phases (1) and (2) can be adjusted by choosing proper monomers Ma, Mb ... Mn and their mass fractions $x_a$, $x_b$, .... $x_n$ in the monomer composition so to arrive at the desired glass transition temperature Tg(1) and Tg(2), respectively. It is common knowledge for a skilled person to choose the proper amounts of monomers Ma, Mb ... Mn for obtaining a copolymer and/or copolymer phase with the desired glass transition temperature.

The monomer composition forming the polymer phase (1) is preferably chosen such that the theoretical glass transition temperature $Tg^t(1)$ is preferably in the range of -80 to +50°C and especially in the range of -30 to 45°C. Likewise, the monomer composition forming the polymer phase (2) is chosen such that the theoretical glass transition temperature $Tg^t(2)$ is preferably in the range of +50 to +180°C, especially in the range of +60 to +150°C. In any case, the difference $|Tg^t(2) - Tg^t(1)|$ is at least 10°C, in particular at least 20°C, especially at least 40°C.

In particular, the relative amount of monomers forming the polymer phase (1) and the monomers forming the polymer phase (2) are chosen such that the monomers M comprise

- 40 to 95 wt.-%, preferably 50 to 90 wt.-%, especially 60 to 85 wt.-%, based on the total amount of the monomers M, of monomers forming the polymer phase (1) having the lower glass transition temperature Tg(1) and
- 5 to 60 wt.-%, preferably 10 to 50 wt.-%, especially 15 to 40 wt.-%, based on the total amount of the monomers M, of monomers forming the polymer phase (2) having the higher glass transition temperature Tg(2).

Consequently, the polymer particles contained in the polymer dispersion comprise

- 50 to 95 wt.-%, preferably 50 to 90 wt.-%, especially 60 to 85 wt.-%, based on the total weight of the polymer particles, of the polymer phase (1) having the lower glass transition temperature Tg(1) and
- 5 to 60 wt.-%, preferably 10 to 50 wt.-%, especially 15 to 40 wt.-%, based on the total weight of the polymer particles, of the polymer phase (2) having the higher glass transition temperature Tg(2).

It is apparent to the skilled person that the monomers M forming the polymer phase (1) and the monomers M forming the polymer phase (2) may be distinct with regard to the type of monomers and/or with regard to their relative amounts. Apparently, the monomers M forming the polymer phase (2) will contain a higher amount of monomers which result in a high glass transition temperature. In one group of embodiments, the relative amount of monomers M2 is higher in the monomers M forming the polymer phase (2) than in the monomers M forming the polymer phase (1). In another group of embodiments, the relative amount of monomers M2 is higher in the monomers M forming the polymer phase (1) than in the monomers M forming the polymer phase (2). However, the overall composition of the monomers M forming the polymer phase (1) and the monomers M forming the polymer phase (2) is in the ranges given above.

Preferably, the polymer particles in the polymer latex are core-shell polymer particles having an acid-rich shell.

A core-shell polymer particle is well understood as a structured polymer particle consisting of at least two different polymer components, one polymer component forming the polymer core and the other polymer component forming the shell of the particle. The term "shell" has to be understood in broad sense and includes a closed polymer shell which surrounds and encloses the polymer core but also fragmented polymer shell which only partly surrounds the polymer core, e.g. as small polymer domains on the polymer core (so-called raspberry structure or patchy particle) or where the shell polymer is coherent and partly engulfs the polymer core (so called acorn-type or Janus particle).

The term "acid-rich shell" means that the concentration of polymerized monomers M1 in the polymer forming the shell is higher than the concentration of polymerized monomers M1 in the polymer forming the core of the polymer particles. Typically, the concentration of polymerized monomers M1 in the polymer shell with respect to the total amount of monomers forming the polymer shell is at least 0.5% by weight, in particular at least 1% by weight higher than the concentration of monomers M1 in the polymer core with respect to the total amount of monomers forming the polymer core, which is also termed acid-poor core. Preferably, this difference is in the range of 0.5 to 20% by weight with respect to the total amount of monomers forming the polymer shell.

In particular, the acid-rich shell of the polymer particles of the aqueous polymer latex comprises 1 to 30% by weight, preferably 2 to 20% by weight, especially 5 to 15% by weight, based on the total weight of the acid-rich polymer shell, of at least one polymerized monomer M1.

Preferably, the at least one monomer M1 in the acid-rich shell is a monoethylenically unsaturated carboxylic acid, more preferably acrylic acid or methacrylic acid and especially methacrylic acid.

In addition to the monomer M1, the acid-rich shell usually contains at least one polymerized monomer M2 as defined above, in particular at least one monomer M2 selected from the preferred and particularly preferred monomers M2.

In particular, the monomers M2 in the acid-rich shell are selected from the group consisting of

- $C_2$-$C_{10}$-alkyl esters of acrylic acid,
  in particular ethyl acrylate, n-butyl acrylate, isbutyl acrylate, tert-butyl acrylate, isopentyl acrylate, n-hexyl acrylate, n-octyl acrylate, 2-ethylhexyl acrylate, 2-propylheptyl acrylate and mixtures thereof, such as for example mixtures of n-butyl acrylate and 2-ethylhexylacrylate or mixtures of n-butyl acrylate and ethyl acrylate or mixtures of ethyl acrylate, n-butyl acrylate, and 2-ethylhexyl acrylate or mixtures of n-butyl acrylate, isobutyl acrylate and 2-ethylhexyl acrylate; and
- $C_1$-$C_4$-alkyl esters of methacrylic acid,
  in particular methyl methacrylate, ethyl methacrylate, n-butyl methacrylate or isobutyl methacrylate.

More preferably, the monomers M2 in the acid-rich shell are a combination of

- at least one monomer M2a, selected from $C_2$-$C_{20}$-alkyl esters of acrylic acid and $C_5$-$C_{20}$-alkyl esters of methacrylic acid; and
- at least one monomer M2b, selected from $C_1$-$C_4$-alkyl esters of methacrylic acid and mixtures thereof.

More particularly, the monomers M2 in the acid-rich shell are a combination of

- at least one monomer M2a, selected from $C_2$-$C_{10}$-alkyl esters of acrylic acid, such as ethyl acrylate, n-butyl acrylate, isobutyl acrylate, isopentyl acrylate, n-hexyl acrylate, n-octyl acrylate, 2-ethylhexyl acrylate, 2-propylheptyl acrylate and mixtures thereof; and
- at least one monomer M2b, selected from $C_1$-$C_4$-alkyl esters of methacrylic acid, such as methyl methacrylate, n-butyl methacrylate, isobutyl methacrylate and mixtures thereof.

Especially, the monomers M2 in the acid-rich shell are a combination of

- at least one monomer M2a, selected from $C_2$-$C_{10}$-alkyl esters of acrylic acid; and
- at least one monomer M2b, selected from methyl methacrylate, n-butyl methacrylate, isobutyl methacrylate and mixtures thereof.

In particular, the acid-rich shell of the polymer particles of the aqueous polymer latex comprises 60 to 99% by weight, preferably 75 to 98% by weight, especially 80 to 95% by weight, based on the total weight of the acid-rich polymer shell, of at least one polymerized monomer M2.

The acid-rich shell of the polymer particles of the aqueous polymer latex may also comprise a monomer M3, in particular a monomer M3'. The amount of monomers M3 will usually not exceed 20% by weight, in particular 15% by weight, especially 10% by weight or 5% by weight, based on the total amount of monomers forming the acid-rich shell.

In a preferred group of embodiments, the monomers which form the acid-rich shell of the polymer particles comprise at least one ethylenically unsaturated monomer which is capable of being crosslinked by a post crosslinking agent, i.e. a monomer M3', in particular, a monomer selected from monomers M3b, M3c, M3d and M3f with particular preference given to monomers M3b and M3c. The total amount of said post-crosslinkable monomers is typically in the range of 0.2 to 20% by weight, preferably from 0.5 to 15% by weight, especially from 1 to 10% by weight, based on the total weight of the monomers forming the acid-rich shell of the polymer particles.

Preferably, the polymer of the acid-rich polymer shall has a weight-average molecular weight of at most 200 kDa, in particular in the range of 5 to 100 kDa, in particular in the range of 5 to 30 kDa. The weight average molecular weight as referred to herein is typically determined by gel permeation chromatography using polymethylmethacrylate standards and tetrahydrofurane as liquid phase.

The monomers forming the polymer core usually comprise at least one monomer M2 as defined herein, in particular at least on monomer M2 selected from the preferred and particularly preferred monomers M2, and optionally one or more monomers M1 and/or M3.

In particular, the monomers M2 in the acid-poor core are selected from the group consisting of

- $C_2$-$C_{10}$-alkyl esters of acrylic acid,
  in particular ethyl acrylate, n-butyl acrylate, isbutyl acrylate, tert-butyl acrylate, isopentyl acrylate, n-hexyl acrylate, n-octyl acrylate, 2-ethylhexyl acrylate, 2-propylheptyl acrylate and mixtures thereof, such as for example mixtures of n-butyl acrylate and 2-ethylhexylacrylate or mixtures of n-butyl acrylate and ethyl acrylate or mixtures of ethyl acrylate, n-butyl acrylate, and 2-ethylhexyl acrylate or mixtures of n-butyl acrylate, isobutyl acrylate and 2-ethylhexyl acrylate; and
- $C_1$-$C_4$-alkyl esters of methacrylic acid,
  in particular methyl methacrylate, ethyl acrylate, n-butyl methacrylate or isobutyl methacrylate.

More preferably, the monomers M2 in the acid-poor core are a combination of

- at least one monomer M2a, selected from $C_1$-$C_{20}$-alkyl esters of acrylic acid and $C_5$-$C_{20}$-alkyl esters of methacrylic acid; and
- at least one monomer M2b, selected and $C_1$-$C_4$-alkyl esters of methacrylic acid and mixtures thereof.

More particularly, the monomers M2 in the acid-poor core are a combination of

- at least one monomer M2a, selected from $C_2$-$C_{10}$-alkyl esters of acrylic acid, such as ethyl acrylate, n-butyl acrylate, isobutyl acrylate, isopentyl acrylate, n-hexyl acrylate, n-octyl acrylate, 2-ethylhexyl acrylate, 2-propylheptyl acrylate and mixtures thereof; and
- at least one monomer M2b, selected from $C_1$-$C_4$-alkyl esters of methacrylic acid, such as methyl methacrylate, n-butyl methacrylate, isobutyl methacrylate and mixtures thereof.

Especially, the monomers M2 in the acid-poor core are a combination of

- at least one monomer M2a, selected from $C_2$-$C_{10}$-alkyl esters of acrylic acid; and
- at least one monomer M2b, selected from methyl methacrylate, n-butyl methacrylate, isobutyl methacrylate and mixtures thereof.

In particular, the acid-poor core of the polymer particles of the aqueous polymer latex comprises 95 to 100% by weight, preferably 98 to 100% by weight, especially 99 to 100% by weight, based on the total weight of the acid-poor core, of at least one polymerized monomer M2.

As the core is acid-poor, the amount of polymerized monomers M1 in the polymer forming the acid-poor core is generally 3 wt.-% or less, preferably 2 wt.-% or less, more preferably 1 wt.-% or less, more preferably 0.5 wt.-% or less, even more preferably 0 wt.-%, based on the total weight of the acid-poor polymer core.

The acid-poor core of the polymer particles of the aqueous polymer latex may also comprise a monomer M3. The amount of monomers M3 will usually not exceed 5% by weight, in particular 2% by weight, especially 1% by weight or may be 0% by weight, based on the total amount of monomers forming the acid-poor core.

Particularly, the polymer of the aqueous polymer latex contains the acid-rich shell in an amount of 5 to 60 wt.-%, more particularly in an amount of 10 to 50 wt.-%, even more particularly 15 to 40 wt.-%, based on the total amount of the polymer. Consequently, the amount of polymer core is typically in the range of 40 to 95 wt.-%, in particular in the range of 50 to 90 wt.-% and especially in the range of 60 to 85 wt.-%, based on the total amount of the polymer.

Preferably, the polymer of the acid-rich shell has a glass transition temperature which is higher than the glass

transition temperature of the polymer core. In particular, the difference of the glass transition temperature of the acid-rich shell is at least 10°C, more preferably at least 20°C and especially at least 40°C higher than the transition temperature of the acid-poor core. The monomer composition forming the acid-poor polymer core is thus preferably chosen such that the theoretical glass transition temperature $Tg^t(c)$ is preferably in the range of -80 to +50°C and especially in the range of -30 to 45°C. The monomer composition forming the acid-rich shell is chosen such that the theoretical glass transition temperature $Tg^t(s)$ is preferably in the range of +50 to +180°C, especially in the range of +60 to +150°C. In any case, the difference $Tg^t(s)$ - $Tg^t(c)$ is at least 10°C, in particular at least 20°C, especially at least 40°C.

Preferably, the solids content of the aqueous polymer latex is 25 to 65% by weight, particularly preferably 30 to 60% by weight, even more preferably 35 to 55% by weight, based on the total amount of liquid components of the aqueous polymer latex.

The aqueous polymer latex is obtainable by a single stage polymerization or a multistage emulsion polymerization. In a single stage polymerization, the overall composition of the monomers M, which are fed to the polymerization reaction under polymerization conditions, remains the same or almost the same, while in a multistage emulsion polymerization the overall composition of the monomers M, which are fed to the polymerization reaction under polymerization conditions, is altered at least once.

In particular, the aqueous polymer latex is obtainable by a 2-stage emulsion polymerization, i.e. the composition of the monomers, which are fed to the polymerization reaction under polymerization conditions, is amended once, or by a 3-stage emulsion polymerization, i.e. the composition of the monomers, which are fed to the polymerization reaction under polymerization conditions, is amended twice.

The conditions required for the performance of the emulsion polymerization of the monomers M are sufficiently familiar to those skilled in the art, for example from the prior art cited at the outset and from "Emulsionspolymerisation" [Emulsion Polymerization] in Encyclopedia of Polymer Science and Engineering, vol. 8, pages 659 ff. (1987); D. C. Blackley, in High Polymer Latices, vol. 1, pages 35 ff. (1966); H. Warson, "The Applications of Synthetic Resin Emulsions", chapter 5, pages 246 ff. (1972); D. Diederich, "Chemie in unserer Zeit", 24, pages 135 to 142 (1990); "Emulsion Polymerisation", Interscience Publishers, New York (1965); DE 4003422 A and "Dispersionen synthetischer Hochpolymerer" [Dispersions of Synthetic High Polymers], F. Hölscher, Springer-Verlag, Berlin (1969)], EP 184091, EP 710680, WO 2012/130712 and WO 2016/04116.

The free-radically initiated aqueous emulsion polymerization is triggered by means of a free-radical polymerization initiator (free-radical initiator). These may, in principle, be peroxides or azo compounds. Of course, redox initiator systems are also useful. Peroxides used may, in principle, be inorganic peroxides, such as hydrogen peroxide or peroxodisulfates, such as the mono- or di-alkali metal or ammonium salts of peroxodisulfuric acid, for example the mono- and disodium, -potassium or ammonium salts, or organic peroxides such as alkyl hydroperoxides, for example tert-butyl hydroperoxide, p-menthyl hydroperoxide or cumyl hydroperoxide, and also dialkyl or diaryl peroxides, such as di-tert-butyl or di-cumyl peroxide. Azo compounds used are essentially 2,2'-azobis(isobutyronitrile), 2,2'-azobis(2,4-dimethylvaleronitrile) and 2,2'-azobis(amidinopropyl) dihydrochloride (AIBA, corresponds to V-50 from Wako Chemicals). Suitable oxidizing agents for redox initiator systems are essentially the peroxides specified above. Corresponding reducing agents which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols, such as dihydroxymaleic acid, benzoin and/or ascorbic acid, and reducing saccharides, such as sorbose, glucose, fructose and/or dihydroxyacetone.

Preferred free-radical initiators are inorganic peroxides, especially peroxodisulfates, and redox initiator systems, in particular ammonium peroxodisulfate.

In general, the amount of the free-radical initiator used, based on the total amount of monomers M, is 0.01 to 5 pphm, preferably 0.1 to 3 pphm.

The amount of free-radical initiator required for the emulsion polymerization of monomers M can be initially charged in the polymerization vessel completely. However, it is also possible to charge none of or merely a portion of the free-radical initiator, for example not more than 30% by weight, especially not more than 20% by weight, based on the total amount of the free-radical initiator and then to add any remaining amount of free-radical initiator to the free-radical polymerization reaction under polymerization conditions. Preferably, at least 70%, in particular at least 80%, especially at least 90% or the total amount of the polymerization initiator are fed to the free-radical polymerization reaction under polymerization conditions. Feeding of the monomers M may be done according to the consumption, batch-wise in one or more portions or continuously with constant or varying flow rates during the free-radical emulsion polymerization of the monomers M.

The emulsion polymerization of the first and second stage can be started with water-soluble initiators. Water-soluble initiators include ammonium and alkali metal salts of peroxodisulfuric acid, e.g. sodium peroxodisulfate, hydrogen

peroxide or organic peroxides, e.g. tert-butyl hydroperoxide. Also suitable as initiators are so-called reduction-oxidation (Red-Ox) initiator systems. Red-Ox initiator systems consist of at least one mostly inorganic reducing agent and an inorganic or organic oxidizing agent. The oxidizing agent is, for example, the initiators for emulsion polymerization already mentioned above. The reducing agent is, for example, alkali metal salts of sulfurous acid, such as sodium sulfite, sodium hydrogen sulfite, alkali salts of dimethyl sulfite, such as sodium disulfite, bisulfite addition compounds of aliphatic aldehydes and ketones, such as acetone bisulfite, or reducing agents such as hydroxymethanesulfinic acid and salts thereof, or ascorbic acid. The Red-Ox initiator systems can be used with the co-application of soluble metal compounds, whose metallic component can occur in several valence states. Common RedOx initiator systems include ascorbic acid/iron(II) sulfate/sodium peroxide disulfate, tert-butyl hydroperoxide/sodium disulfite, tert-butyl hydroperoxide/Na-hydroxymethanesulfinic acid. The individual components, e.g. the reduction component, can also be mixtures, e.g. a mixture of the sodium salt of hydroxymethanesulfinic acid and sodium disulfite.

The initiators can be used in the form of aqueous solutions, wherein the lower concentration is determined by the amount of water that can be used in the aqueous polymer latex and the upper concentration is determined by the solubility of the compound in question in water. In general, the concentration of the initiators is 0.1 to 30% by weight, preferably 0.2 to 20% by weight, particularly preferably 0.3 to 10% by weight, based on the monomers to be polymerized in the respective stage of the multistage aqueous emulsion polymerization. Several different initiators can also be used in emulsion polymerization.

Generally, the term "polymerization conditions" is understood to mean those temperatures and pressures under which the free-radically initiated aqueous emulsion polymerization proceeds at sufficient polymerization rate. They depend particularly on the free-radical initiator used. Advantageously, the type and amount of the free-radical initiator, polymerization temperature and polymerization pressure are selected, such that a sufficient amount of initiating radicals is always present to initiate or to maintain the polymerization reaction.

Preferably, the radical emulsion polymerization of the monomers M is performed by a so-called feed process (also termed monomer feed method), which means that at least 80%, in particular at least 90% of the total amount of the monomers M to be polymerized are metered to the polymerization reaction under polymerization conditions during a metering period P. Addition may be done in portions and preferably continuously with constant or varying feed rate. The duration of the period P may depend on the production equipment and may vary from e.g. 20 minutes to 12 h. Frequently, the duration of the period P will be in the range from 0.5 h to 8 h, especially from 1 h to 6 h. In a multistep emulsion polymerization step, the total duration of all steps is typically in the above ranges. The duration of the individual steps is typically shorter. Preferably, at least 70%, in particular at least 80%, especially at least 90% of the total amount of the polymerization initiator is introduced into emulsion polymerization in parallel to the addition of the monomers.

The free-radical aqueous emulsion polymerization of the invention is usually conducted at temperatures in the range from 0 to +170°C. Temperatures employed are frequently in the range from +50 to +120°C, in particular in the range from +60 to +120°C and especially in the range from +70 to +110°C.

The free-radical aqueous emulsion polymerization of the invention can be conducted at a pressure of less than, equal to or greater than 1 atm (atmospheric pressure), and so the polymerization temperature may exceed +100°C and may be up to +170°C.

Polymerization of the monomers is normally performed at ambient pressure, but it may also be performed under elevated pressure. In this case, the pressure may assume values of 1.2, 1.5, 2, 5, 10, 15 bar (absolute) or even higher values. If emulsion polymerizations are conducted under reduced pressure, pressures of 950 mbar, frequently of 900 mbar and often 850 mbar (absolute) are established. Advantageously, the free-radical aqueous emulsion polymerization of the invention is conducted at ambient pressure (about 1 atm) with exclusion of oxygen, e.g. under an inert gas atmosphere, for example under nitrogen or argon.

The aqueous radical emulsion polymerization is usually performed in the presence of one or more suitable surfactants. These surfactants typically comprise emulsifiers and provide micelles, in which the polymerization occurs, and which serve to stabilize the monomer droplets during aqueous emulsion polymerization and also growing polymer particles. The surfactants used in the emulsion polymerization are usually not separated from the polymer latex, but remain in the aqueous polymer latex obtainable by the emulsion polymerization of the monomers M.

The surfactant may be selected from emulsifiers and protective colloids. Protective colloids, as opposed to emulsifiers, are understood to mean polymeric compounds having molecular weights above 2000 Daltons, whereas emulsifiers typically have lower molecular weights. The surfactants may be anionic or non-ionic or mixtures of non-ionic and anionic surfactants.

Optionally, the emulsion polymerization of the monomers M can take place in the presence of the anionic copolymerizable emulsifiers. Preferably, a total of less than 2.5 or less than 2 .0 wt.-% of an anionic copolymerizable emulsifier, in particular less than 1.5% by weight, based on the solids content of the finished aqueous polymer latex.

Anionic surfactants usually bear at least one anionic group which is typically selected from phosphate, phosphonate, sulfate and sulfonate groups. The anionic surfactants which bear at least one anionic group are typically used in the form of their alkali metal salts, especially of their sodium salts or in the form of their ammonium salts.

Preferred anionic surfactants are anionic emulsifiers, in particular those which bear at least one sulfate or sulfonate group. Likewise, anionic emulsifiers which bear at least one phosphate or phosphonate group may be used, either as sole anionic emulsifiers or in combination with one or more anionic emulsifiers which bear at least one sulfate or sulfonate group.

Examples of anionic emulsifiers which bear at least one sulfate or sulfonate group, are, for example,

- the salts, especially the alkali metal and ammonium salts, of alkyl sulfates, especially of $C_8$-$C_{22}$-alkyl sulfates,
- the salts, especially the alkali metal and ammonium salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,
- the salts, especially the alkali metal and ammonium salts, of alkylsulfonic acids, especially of $C_8$-$C_{22}$-alkylsulfonic acids,
- the salts, especially the alkali metal and ammonium salts, of dialkyl esters, especially di-$C_4$-$C_{18}$-alkyl esters of sulfosuccinic acid,
- the salts, especially the alkali metal and ammonium salts, of alkylbenzenesulfonic acids, especially of $C_4$-$C_{22}$-alkylbenzenesulfonic acids,
- the salts, especially the alkali metal and ammonium salts, of mono- or disulfonated, alkyl-substituted diphenyl ethers, for example of bis(phenylsulfonic acid) ethers bearing a $C_4$-$C_{24}$-alkyl group on one or both aromatic rings. The latter are common knowledge, for example from US-A-4,269,749, and are commercially available, for example as Dowfax® 2A1 (Dow Chemical Company); and
- surfactants, which have a polymerizable ethylenically unsaturated double bond as described herein, e.g. the compounds of the formulae (I) - (IV), where X and Y, respectively, are $SO_3^-$ or O-$SO_3^-$.

Examples of anionic emulsifiers, which bear a phosphate or phosphonate group, include but are not limited to the following salts are selected from the following groups:

- the salts, especially the alkali metal and ammonium salts, of mono- and dialkyl phosphates, especially $C_8$-$C_{22}$-alkyl phosphates,
- the salts, especially the alkali metal and ammonium salts, of phosphoric monoesters of $C_2$-$C_3$-alkoxylated alkanols, preferably having an alkoxylation level in the range from 2 to 40, especially in the range from 3 to 30, for example phosphoric monoesters of ethoxylated $C_8$-$C_{22}$-alkanols, preferably having an ethoxylation level (EO level) in the range from 2 to 40, phosphoric monoesters of propoxylated $C_8$-$C_{22}$-alkanols, preferably having a propoxylation level (PO level) in the range from 2 to 40, and phosphoric monoesters of ethoxylated-co-propoxylated $C_8$-$C_{22}$-alkanols, preferably having an ethoxylation level (EO level) in the range from 1 to 20 and a propoxylation level of 1 to 20,
- the salts, especially the alkali metal and ammonium salts, of alkylphosphonic acids, especially $C_8$-$C_{22}$-alkylphosphonic acids and
- the salts, especially the alkali metal and ammonium salts, of alkylbenzenephosphonic acids, especially $C_4$-$C_{22}$-alkylbenzenephosphonic acids; and
- surfactants, which have a polymerizable ethylenically unsaturated double bond as described herein, e.g. the compounds of the formulae (I) - (IV), where X and Y, respectively, are $HPO_3^-$, $PO_3^{2-}$, O-$HPO_3^-$ or O-$PO_3^{2-}$.

A particularly preferred anionic emulsifier is sodium pyrophosphate.

Anionic emulsifiers may also comprise emulsifiers, which have a polymerizable double bond, e.g. the emulsifiers of the formulae (I) to (IV) and the salts thereof, in particular the alkalimetal salts or ammonium salts thereof:

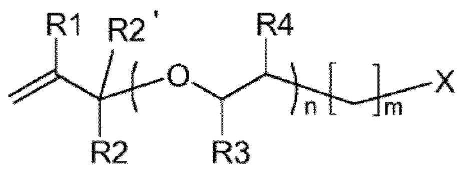

(I)

In formula (I), $R^1$ is H, $C_1$-$C_{20}$-alkyl, $C_5$-$C_{10}$-cycloalkyl, phenyl optionally substituted with $C_1$-$C_{20}$-alkyl, $R^2$ and $R^{2'}$ are both H or together are O, $R^3$ and $R^4$ are H or methyl, m is 0 or 1, n is an integer from 1 - 100 and X is $SO_3^-$, O-$SO_3^-$, O-$HPO_3^-$ or O-$PO_3^{2-}$.

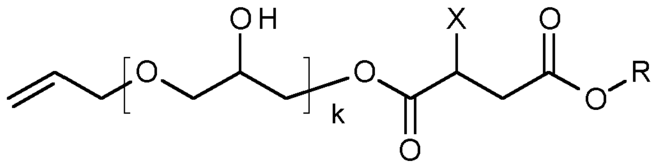

(II)

In formula (II), R is H, $C_1$-$C_{20}$-alkyl, $C_5$-$C_{10}$-cycloalkyl, phenyl optionally substituted with $C_1$-$C_{20}$-alkyl, k is 0 or 1 and X is $SO_3^-$, O-$SO_3^-$, O-$HPO_3^-$ or O-$PO_3^{2-}$.

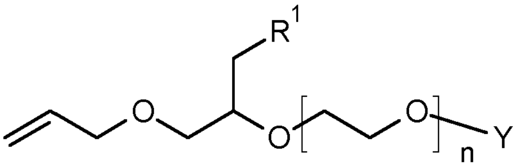

(III)

In formula (III), $R^1$ is H, OH, $C_1$-$C_{20}$-alkyl, O-$C_1$-$C_{20}$-alkyl, $C_5$-$C_{10}$-cycloalkyl, O-$C_5$-$C_{10}$-cycloalkyl, O-phenyl optionally substituted with $C_1$-$C_{20}$-alkyl, n is an integer from 1 - 100 and Y is $SO_3^-$, $HPO_3^-$ or $PO_3^{2-}$.

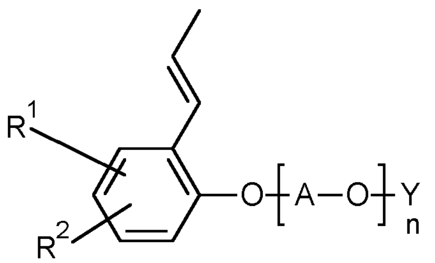

(IV)

In formula (IV), $R^1$ is H, $C_1$-$C_{20}$-alkyl or 1-phenylethyl, $R^2$ is H, $C_1$-$C_{20}$-alkyl or 1-phenylethyl, A is $C_2$-$C_4$-alkandiyl, such as 1,2-ethandiyl or 1,2-propandiyl or combinations thereof, n is an integer from 1 to 100 and Y is $SO_3^-$, $HPO_3^-$ or $PO_3^{2-}$.

The anionic copolymerizable emulsifiers may be present in neutralized form. Preferably, as counterion for the anionic groups X and/or Y, there is a cation selected from the group consisting of $H^+$, $Li^+$, $Na^+$, $K^+$, $Ca^{2+}$, $NH_4^+$ and mixtures thereof. Preferred cations are $NH_4^+$ or $Na^+$.

Particular embodiments of the copolymerizable emulsifiers of formula (I) are referred to as sulfate esters or phosphate esters of polyethylene glycol monoacrylates. Particular embodiments of the copolymerizable emulsifiers of formula (I) may likewise also be referred to as phosphonate esters of polyethylene glycol monoacrylates, or allyl ether sulfates. Commercially available co-polymerizable emulsifiers of formula (I) are Maxemul® emulsifiers, Sipomer® PAM emulsifiers, Latemul® PD and ADEKA Reasoap® PP-70.

Particular embodiments of the copolymerizable emulsifiers of formula (II) are also referred to as alkyl allyl sulfosuccinates. Commercially available copolymerizable emulsifiers of formula (II) is Trem® LF40.

Particular embodiments of the copolymerizable emulsifiers of formula (III) are also referred to as branched unsaturated. Commercially available copolymerizable emulsifiers of formula (III) are Adeka® Reasoap emulsifiers and Hitenol® KH.

Particular embodiments of the copolymerizable emulsifiers of the formula (IV) are also referred to as polyoxyethylene alkylphenyl ether sulfate and polyoxyethylene mono- or distyrylphenyl ether sulfate. Commercially available copolymerizable emulsifiers of formula (IV) are Hitenol® BC and Hitenol® AR emulsifiers.

Further suitable anionic surfactants can be found in Houben-Weyl, Methoden der organischen Chemie [Methods of Organic Chemistry], volume XIV/1, Makromolekulare Stoffe [Macromolecular Substances], Georg-Thieme-Verlag, Stuttgart, 1961, p. 192-208.

Preferably, the surfactant comprises at least one anionic emulsifier which bears at least one sulfate or sulfonate group. The at least one anionic emulsifier which bears at least one sulfate or sulfonate group, may be the sole type of anionic emulsifiers. However, mixtures of at least one anionic emulsifier, which bears at least one sulfate or sulfonate group and at least one anionic emulsifier which bears at least one phosphate or phosphonate group may also be used. In such mixtures, the amount of the at least one anionic emulsifier which bears at least one sulfate or sulfonate group is preferably at least 50% by weight, based on the total weight of anionic surfactants used in the process of the present invention. In particular, the amount of anionic emulsifiers which bear at least one phosphate or phosphonate group does not exceed

20% by weight, based on the total weight of anionic surfactants used in the process of the present invention.

Preferred anionic surfactants are anionic emulsifiers which are selected from the following groups, including mixtures thereof:

- the salts, especially the alkali metal and ammonium salts, of alkyl sulfates, especially of $C_8$-$C_{22}$-alkyl sulfates,
- the salts, especially the alkali metal salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,
- of sulfuric monoesters of ethoxylated alkylphenols, especially of sulfuric monoesters of ethoxylated $C_4$-$C_{18}$-alkylphenols (EO level preferably 3 to 40),
- of alkylbenzenesulfonic acids, especially of $C_4$-$C_{22}$-alkylbenzenesulfonic acids,
- of mono- or disulfonated, alkyl-substituted diphenyl ethers, for example of bis(phenylsulfonic acid) ethers bearing a $C_4$-$C_{24}$-alkyl group on one or both aromatic rings; and
- polymerizable emulsifiers of formula (III).

Particular preference is given to anionic emulsifiers which are selected from the following groups including mixtures thereof:

- the salts, especially the alkali metal and ammonium salts, of alkyl sulfates, especially of $C_8$-$C_{22}$-alkyl sulfates,
- the salts, especially the alkali metal salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,
- of mono- or disulfonated, alkyl-substituted diphenyl ethers, for example of bis(phenylsulfonic acid) ethers bearing a $C_4$-$C_{24}$-alkyl group on one or both aromatic rings; and
- polymerizable emulsifiers of the formula (III), where Y is $SO_3^-$.

It has been found advantageous to perform the free-radical emulsion polymerization of the monomers M in the presence of a seed latex. A seed latex is a polymer latex which is present in the aqueous polymerization medium before the polymerization of monomers M is started. The seed latex may help to better adjust the particle size or the final polymer latex obtained in the free-radical emulsion polymerization of the invention.

Principally, every polymer latex may serve as a seed latex. For the purpose of the invention, preference is given to seed latices, where the particle size of the polymer particles is comparatively small. In particular, the Z average particle diameter of the polymer particles of the seed latex, as determined by dynamic light scattering (DLS) at 20°C (see below), is preferably in the range from 10 to 80 nm, in particular from 10 to 50 nm. Preferably, the polymer particles of the seed latex is made of ethylenically unsaturated monomers, which comprise at least 95% by weight, based on the total weight of the monomers forming the seed latex, of one or more monomers M2 as defined above. In particular at least 95% by weight the monomers M.s forming the seed latex are selected from $C_2$-$C_6$ alkyl acrylates, $C_1$-$C_6$ alkyl methacrylates, styrene and combinations thereof.

For this, the seed latex is usually charged into the polymerization vessel before the polymerization of the monomers M is started. In particular, the seed latex is charged into the polymerization vessel followed by establishing the polymerization conditions, e.g. by heating the mixture to polymerization temperature. It may be beneficial to charge at least a portion of the free-radical initiator into the polymerization vessel before the addition of the monomers M is started. However, it is also possible to add the monomers M and the free-radical polymerization initiator in parallel to the polymerization vessel.

The amount of seed latex, calculated as solids, may frequently be in the range from 0.05 to 5% by weight, in particular from 0.1 to 3% by weight, based on the total weight of the monomers in the monomer composition M to be polymerized.

If the polymer particles of the polymer latex have a multiphase structure, in particular an acid-rich shell, the aqueous polymer latex prepared by a multistage emulsion polymerization comprises the ethylenically unsaturated monomers M. In particular, if the polymer particles of the polymer latex have an acid-rich shell, the process comprises

a) a first stage of aqueous emulsion polymerizing a first monomer composition of ethylenically unsaturated monomers M.a comprising at least one monomer M1 selected from monoethylenically unsaturated carboxylic acids and at least one monoethylenically unsaturated non-ionic monomer M2 which is sparingly water-soluble; and

b) a second stage of aqueous emulsion polymerizing of a second monomer composition of ethylenically unsaturated monomers M.b comprising at least one monoethylenically unsaturated non-ionic monomer M2 which is sparingly water-soluble, in the presence of the polymer of step a).

In the first stage, the monomers M.a correspond to the monomers forming the acid-rich polymer shell, while the monomers M.b correspond to the monomers forming the acid-poor polymer core. The relative amounts of monomers M1, M2 and optionally M3 in the monomer composition M.a are as defined above for the acid-rich shell, while the relative amounts of monomers M1, M2 and optionally M3 in the monomer composition M.b are as defined above for the acid-poor core. Due to the higher content of carboxylic acid monomers M1 in the monomer composition M.a, the resulting polymer is more hydrophilic and thus forms the outer polymer phase, i.e. the polymer shell of the polymer particles, while the less hydrophilic polymer forms the inner polymer phase, i.e. the polymer core of the polymer particles.

The monomers M.a forming the acid-rich shell are preferably chosen such that their theoretical glass transition temperature according to Fox ($Tg^t$(a)) is in the range from +50 to +180 °C, in particular in the range from +60 to +150 °C; and the monomers M.b forming the acid-poor core are preferably chosen such that their theoretical glass transition temperature according to Fox ($Tg^t$(b)) is in the range from -80 to +50°C, in particular in the range from -30 to +45°C, provided that the temperature difference I $Tg^t$(a) - $Tg^t$(b)I is at least 10°C, in particular at least 20°C, especially at least 40°C, i.e., the absolute value of |$Tg^t$(a) - $Tg^t$(b)| is at least 10°C , in particular at least 20°C, especially at least 40°C.

Preferably, the polymer latex obtained by polymerization of the first monomer composition M.a is mixed with a base. The base leads to a partial or complete neutralization of the acidic groups, i.e. the carboxyl groups of the polymer of the first stage. It can lead to a swelling of the polymer particles of the polymer latex obtained by emulsion polymerization of the monomers M.a, but can also completely transfer them into solution. Preferably, only partial neutralization is carried out, for example at least 70%, particularly at least 60%, more particularly at least 50% of the carboxyl groups present.

The neutralization of the acid groups of the polymer can be carried out, in particular by at least partial addition of a base before and/or during the polymerization of the second stage. The base can be added in a common feed with the monomers to be polymerized or in a separate feed, in particular after the first stage. After addition of all the monomers of the second stage, the base required for neutralization of at least 70%, preferably 70 to 100% or 70 to 95% acid equivalents is contained in the polymerization vessel. Preferably, at least 70%, in particular at least 90% of the total amount of the base required for neutralization of the acid groups in the polymer latex made of the monomer composition M.a is added before the polymerization of the monomer composition M.b is started.

Examples of suitable bases for neutralization of the acid groups in the polymer latex made of the monomer composition M.a include but are not limited to alkali or alkaline earth compounds such as sodium hydroxide, potassium hydroxide, calcium hydroxide, magnesium oxide, sodium carbonate; ammonia; primary, secondary and tertiary amines, such as ethylamine, propylamine, monoisopropylamine, monobutylamine, hexylamine, ethanolamine, dimethylamine, diethylamine, din-propylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminethylamine, 2,3-diaminopropane, 1,2-propylenediamine, dimethylaminopropylamine, neopentanediamine, hexamethylenediamine, 4,9-dioxadodecane-1,12-diamine, polyethyleneimine or polyvinylamine. Preferably, the base used for neutralization is a volatile base, more preferably ammonia.

In particular, the aqueous polymer latexes are prepared by a multistage emulsion polymerization in the presence of at least one chain transfer agent.

In a preferred embodiment, the aqueous polymer latexes are prepared by a multistage emulsion polymerization comprising a first stage of aqueous emulsion polymerization of a first monomer composition M.a in the presence of at least one chain transfer agent.

In general, chain transfer agents are understood to mean compounds that transfer free radicals, thereby stop the growth of the polymer chain or control chain growth in the polymerization, and which thus reduce the molecular weight of the resulting polymers. Usually, chain transfer agents possess at least one readily abstractable hydrogen atom. Preferably, the abstractable hydrogen is part of a mercapto group, i.e. a group SH, also termed "thiol group".

The chain transfer agent is in particular selected from the group consisting of

- $C_1$-$C_{20}$-alkyl esters of SH-substituted $C_2$-$C_6$ alkanoic acids, hereinafter $C_2$-$C_6$ thioalkanoic acids (chain transfer compounds T.1), in particular $C_1$-$C_{20}$-alkyl esters of mercaptoacetic acid (= thioglycolic acid)), such as methyl thioglycolate, ethyl thioglycolate, n-butyl thioglycolate, n-hexyl thioglycolate, n-octyl thioglycolate, 2-ethylhexyl thioglycolate and n-decylthioglycolate, and $C_1$-$C_{20}$-alkyl esters of mercaptopropionic acid, such as methyl mercaptopropionate, ethyl mercaptopropionate, n-butyl mercaptopropionate, n-hexyl mercaptopropionate, n-octyl mercaptopropionate, 2-ethylhexyl mercaptopropionate and n-decyl mercaptopropionate;
- $C_1$-$C_{20}$-alkyl mercaptans (chain transfer compounds T.2), in particular to $C_6$-$C_{16}$-alkyl mercaptans, for example ethanethiol, n-propanethiol, 2-propanethiol, n-butanethiol, 2-butanethiol, 2-methyl-2-propanethiol, n-pentanethiol, 2-pentanethiol, 3-pentanethiol, 2-methyl-2-butanethiol, 3-methyl-2-butanethiol, n-hexanethiol, 2-hexanethiol, 3-hexanethiol, 2-methyl-2-pentanethiol, 3-methyl-2-pentanethiol, 4-methyl-2-pentanethiol, 2-methyl-3-pentanethiol, 3-methyl-3-pentanethiol, 2-ethylbutanethiol, 2-ethyl-2-butanethiol, n-heptanethiol and the isomeric compounds thereof, n-octanethiol and the isomeric compounds thereof, n-nonanethiol and the isomeric compounds thereof, n-decanethiol and the isomeric compounds thereof, n-undecanethiol and the isomeric compounds thereof, n-dodecanethiol and the isomeric compounds thereof, such as tert.-dodecanethiol, n-tridecanethiol and isomeric compounds thereof;

- OH-substituted $C_2$-$C_{20}$-alkyl mercaptans (chain transfer compounds T.3), for example 2-hydroxyethanethiol and 2-hydroxypropanethiol;
- aromatic thiols (chain transfer compounds T.4), such as benzenethiol, ortho-, meta- or para-methylbenzenethiol; and
- mixtures thereof.

Examples of further chain transfer agents, which may be used instead of the chain transfer agents T.1 to T.4 or in combination therewith, are aliphatic and/or araliphatic halogen compounds, for example n-butyl chloride, n-butyl bromide, n-butyl iodide, methylene chloride, ethylene dichloride, chloroform, bromoform, bromotrichloromethane, dibromodichloromethane, carbon tetrachloride, carbon tetrabromide, benzyl chloride, benzyl bromide, but also aliphatic and/or aromatic aldehydes, such as acetaldehyde, propionaldehyde and/or benzaldehyde, hydrocarbons having readily abstractable hydrogen atoms, for example toluene and thiol compounds different from T.1 to T.4, e.g. thiol compounds described in Polymer Handbook, 3rd edition, 1989, J. Brandrup and E.H. Immergut, John Wiley & Sons, section II, pages 133 to 141.

Particular preference is given to chain transfer agents T.1 and T.2, in particular to $C_4$-$C_{16}$-alkyl esters of SH-substituted $C_2$-$C_4$ alkanoic acids, especially to $C_4$-$C_{16}$-alkyl esters of mercaptoacetic acid, to $C_4$-$C_{16}$-alkyl esters of mercaptopropionic acid, to $C_6$-$C_{16}$-alkyl mercaptans and to mixtures thereof.

Especially preferred chain transfer agents are 3-mercapto-propionic-acid isooctylester which is also termed isooctyl 3-mercaptopropionate (IOMPA) and 2-mercapto-acetic-acid 2-ethylhexylester (EHTG) also termed 2-ethylhexyl thioglycolate.

The amount of chain transfer agent is preferably in the range of 0.05 to 1.2% by weight, in particular in the range from 0.1 to 0.9% by weight, especially in the range from 0.15 to 0.6% by weight, based on the total weight of the monomers M.a.

The emulsion polymerization of the monomers M.b can be carried out by conventional emulsion polymerization techniques as described above. Preferably, the majority, in particular at least 90% of the monomers M.b, is fed to the polymer latex obtained in the first stage, optionally after neutralization, under polymerization conditions. The addition of the M.b can be carried out with constant feed rate or in a gradient mode. For the purposes of the present invention, the gradient method is understood to mean an emulsion polymerization in which one or more monomers are added at a non-constant feed rate. For reasons of ease of handling in terms of the apparatus, in the experiments described here the velocities were not continuous (= "real gradient"), but stepwise (= interpolated gradient). In the mathematical sense, the application of the dosing speed against time thus represents a discontinuous function. In principle, however, continuous speed changes can also be carried out without great additional effort.

It is frequently advantageous when the aqueous polymer latex obtained upon completion of polymerization of the monomers M is subjected to a post-treatment to reduce the residual monomer content. This post-treatment is effected either chemically, for example by completing the polymerization reaction using a more effective free-radical initiator system (known as post-polymerization), and/or physically, for example by stripping the aqueous polymer latex with steam or inert gas. Corresponding chemical and physical methods are familiar to those skilled in the art, for example from EP 771328 A, DE 19624299 A, DE 19621027 A, DE 19741184 A, DE 19741187 A, DE 19805122 A, DE 19828183 A, DE 19839199 A, DE 19840586 A and

DE 19847115 A. The combination of chemical and physical post-treatment has the advantage that it removes not only the unconverted ethylenically unsaturated monomers, but also other disruptive volatile organic constituents (VOCs) from the aqueous polymer latex.

Furthermore, it might be suitable to formulate the polymer latex of the invention with a post-curing agent. Ideally, such a post-curing agent, also termed post-crosslinking agent, will result in a crosslinking reaction during and/or after film formation by forming coordinative or covalent bonds with reactive sites on the surface of the polymer particles.

Crosslinking agents, which are suitable for providing post-crosslinking, are for example compounds having at least two functional groups selected from oxazoline, amino, aldehyde, aminoxy, carbodiimide, aziridinyl, epoxy and hydrazide groups, derivatives or compounds bearing acetoacetyl groups. These crosslinkers react with reactive sites of the polymers of the polymer latex, which bear complementary functional groups in the polymer, which are capable of forming a covalent bond with the crosslinker. Suitable systems are known to skilled persons.

As the polymers contained in the polymer latex of the invention bear carboxyl groups, post-crosslinking can be achieved by formulation of the polymer latex with one or more polycarbodiimides as described in US 4977219, US 5047588, US 5117059, EP 0277361, EP 0507407, EP 0628582, US 5352400, US 2011/0151128 and US 2011/0217471. It is assumed that crosslinking is based on the reaction of the carboxyl groups of the polymers with polycarbodiimides. The reaction typically results in covalent cross-links, which are predominately based on N-acyl urea bounds (J.W. Taylor and D.R. Bassett, in E.J. Glass (Ed.), Technology for Waterborne Coatings, ACS Symposium Series 663, Am. Chem. Soc., Washington, DC, 1997, chapter 8, pages 137 to 163).

Likewise, as the polymer particles contained in the polymer latex of the present invention bear carboxyl groups

stemming from the first monomer composition M1, a suitable post-curing agent may also be a water-soluble or water-dispersible polymer bearing oxazoline groups, e.g. the polymers as described in US 5300602 and WO 2015/197662.

Post-crosslinking can also be achieved by analogy to EP 1227116, which describes aqueous two-component coating compositions containing a binder polymer with carboxylic acid and hydroxyl functional groups and a polyfunctional crosslinker having functional groups selected from isocyanate, carbodiimide, aziridinyl and epoxy groups.

If the polymer in the polymer latex bears a keto group, e.g. by using a monomer such as diacetone acrylamide (DAAM), post-crosslinking can be achieved by formulating the aqueous polymer latex with one or more dihydrazides, in particular aliphatic dicarboxylic acid dihydrazides such as adipic acid dihydrazide (ADDH) as described in US 4931494, US 2006/247367 and US 2004/143058. These components react basically during and after film formation, although a certain extent of preliminary reaction may occur.

Other suitable agents to achieve post-curing include

- epoxysilanes to crosslink carboxy groups in the polymer;
- dialdehydes such as glyoxal to crosslink urea groups or acetoacetoxy groups, such as those derived from the monomers M1d as defined herein, in particular ureido (meth)acrylate, acetoacetoxyethyl acrylate or acetoacetoxyethyl methacrylate; and
- di- and/or polyamines to crosslink keto groups or epoxy groups such as those derived from the monomers M1c or M1d as defined herein.

Suitable systems are e.g. described in EP 0789724, US 5516453 and US 5498659.

According to the invention, a post cross-linking step is carried out after mixing of the aqueous polymer latex with at least one silane compound of formula (1) at the same temperature applied for the mixing.

Preferably, the post cross-linking step is carried out using adipic acid dihydrazide.

The modified aqueous polymer latices of the present invention are useful as binders or co-binders in industrial waterborne varnishes, preferably for furniture and door varnishes.

The varnishes containing the modified aqueous polymer latex of the invention as binders or co-binders may comprise inorganic fillers and/or pigments. The proportion of the pigments and fillers in the varnish compositions can be described in a manner known per se via the pigment volume concentration (PVC). The PVC describes the ratio of the volume of pigments (VP) and fillers (VF) relative to the total volume, consisting of the volumes of binder (VB), pigments (VP) and fillers (VF) in a dried coating film in percent: $PVC = (VP + VF) \times 100 / (VP + VF + VB)$.

Preferably, the PVC value of varnishes containing the modified aqueous polymer latex according to the invention will not exceed a value of 60 and is more preferably less than 55, even more preferably less than 50, especially less than 45, frequently less than 30, in particular in the range of 35 to 15 or 20 to 30.

Pigments for the purposes of the present invention are virtually insoluble, finely dispersed, organic or preferably inorganic colorants as per the definition in German standard specification DIN 55944:2003-11. Examples of pigments are in particular inorganic pigments, such as white pigments like titanium dioxide (C.I. Pigment White 6), but also color pigments, e.g.

- black pigments, such as iron oxide black (C.I. Pigment Black 11), iron manganese black, spinel black (C.I. Pigment Black 27), carbon black (C.I. Pigment Black 7);
- color pigments, such as chromium oxide, chromium oxide hydrate green; chrome green (C.I. Pigment Green 48); cobalt green (C.I. Pigment Green 50); ultramarine green; cobalt blue (C.I. Pigment Blue 28 und 36); ultramarine blue, iron blue (C.I. Pigment Blue 27), manganese blue, ultramarine violet, cobalt violet, manganese violet, iron oxide read (C.I. Pigment Red 101); cadmium sulfoselenide (C.I. Pigment Red 108); molybdate read (C.I. Pigment Red 104); ultramarine read,
- iron oxide brown, mixed brown, spinel- and Korundum phases (C.I. Pigment Brown 24, 29 und 31), chrome orange;
- iron oxide yellow (C.I. Pigment Yellow 42); nickel titanium yellow (C.I. Pigment Yellow 53; C.I. Pigment Yellow 157 und 164); chrome titanium yellow; cadmium sulfide und cadmium zinc sulfide (C.I. Pigment Yellow 37 und 35); Chrome yellow (C.I. Pigment Yellow 34), zinc yellow, alkaline earth metal chromates; Naples yellow; bismuth vanadate (C.I. Pigment Yellow 184); and
- Interference pigments, such as metallic effect pigments based on coated metal platelets, pearl luster pigments based on mica platelets coated with metal oxide, and liquid crystal pigments.

The varnishes may also contain one or more fillers. Examples of suitable fillers are aluminosilicates, such as feldspars, silicates, such as kaolin, talc, mica, magnesite, alkaline earth metal carbonates, such as calcium carbonate, for example in the form of calcite or chalk, magnesium carbonate, dolomite, alkaline earth metal sulfates, such as calcium sulfate, silicon dioxide, etc. In the coating compositions of the invention, finely divided fillers are naturally preferred. The fillers may be used in the form of individual components. In practice, however, filler mixtures have been found to be

particularly useful, for example calcium carbonate/kaolin, calcium carbonate/talc. Gloss paints generally comprise only small amounts of very finely divided fillers or do not comprise any fillers. Fillers also include flatting agents which significantly impair the gloss as desired. Flatting agents are generally transparent and may be either organic or inorganic. Examples of flatting agents are inorganic silicates, for example the Syloid® brands from W. R. Grace & Company and the Acematt® brands from Evonik GmbH. Organic flatting agents are obtainable, for example, from BYK-Chemie GmbH under the Ceraflour® brands and the Ceramat® brands, and from Deuteron GmbH under the Deuteron MK® brand.

Preferably, the varnishes comprising at least one modified aqueous polymer latex as defined herein further comprise a rheology modifying agent. Suitable rheology modifying agents include associative thickener polymers and non-associative rheology modifiers. The aqueous liquid composition preferably comprises a thickening agent selected from the group consisting of associative thickeners and optionally a non-associative thickener.

Associative thickener polymers are well known and frequently described in scientific literature, e.g. by E.J. Schaller et al., "Associative Thickeners" in Handbook of Coating Additives, Vol. 2 (Editor L.J.Calbo), Marcel Decker 192, pp. 105-164, J. Bieleman "PUR-Verdicker" in Additives for Coatings (Editor J. Bielemann), Wiley 2000, pp 50 - 58. NiSAT thickener polymers of the HEUR and HMPE type are also described in the patent literature, such as US 4,079,028, US 4155,892, EP 61822, EP 307775, WO 96/31550, EP 612329, EP 1013264, EP 1541643, EP 1584331, EP 2184304, DE 4137247, DE 102004008015, DE 102004031786, US 2011/0166291 and WO 2012/052508. Apart from that, associative thickener polymers are commercially available.

The associative thickener polymers include anionic, acrylate type thickener polymers, so-called HASE polymers (hydrophobically modified polyacrylate thickeners), which are copolymers of acrylic acid and alkyl acrylate monomers, where the alkyl group of the alkyl acrylate may have from 6 to 24 carbon atoms. The associative thickener polymers also include non-ionic associative thickeners, so-called NiSAT thickeners (non-ionic synthetic associative thickeners), which usually are linear or branched block copolymers having at least one interior hydrophilic moiety, in particular a polyether moiety, especially at least one polyethylene oxide moiety and two or more terminal hydrocarbon groups each having at least 4 carbon atoms, in particular from 4 to 24 carbon atoms, e.g. a linear or branched alkyl radical having 4 to 24 carbon atoms or alkyl substituted phenyl having 7 to 24 carbon atoms. NiSAT thickeners include the hydrophobically modified polyethylene oxide urethane rheology modifiers, also termed HEUR or PUR thickeners, and hydrophobically modified polyethyleneoxides, which are also termed HMPE.

The amount of the associative thickener polymer will depend on the desired viscosity profile and is frequently in the range from 0.05 to 2.5% by weight, in particular 0.1 to 2% by weight of thickener, and especially 0.2 to 2% by weight, based on the varnish.

Suitable non-associative rheology modifiers are in particular cellulose-based thickeners, especially hydroxyethyl cellulose, but also thickeners based on acrylate emulsions (ASE). Amongst the non-associative rheology modifiers preference is given to non-associative cellulose based thickeners.

The total amount of the thickener polymer will depend on the desired viscosity profile of the varnish and is frequently in the range from 0.05 to 2.5% by weight, in particular 0.1 to 2% by weight of thickener, and especially 0.15 to 1.5% by weight, based on the varnish.

The waterborne varnishes of the invention may also comprise customary auxiliaries.

The customary auxiliaries will depend on the kind of the coating in a well-known manner and include but are not limited to:

- wetting agents or dispersants,
- filming auxiliaries, also termed coalescents,
- leveling agents,
- UV stabilizers,
- biocides and
- defoamers/de-aerators.

Suitable wetting agents or dispersants are, for example, sodium polyphosphates, potassium polyphosphates or ammonium polyphosphates, alkali metal salts and ammonium salts of acrylic acid copolymers or maleic anhydride copolymers, polyphosphonates, such as sodium 1-hydroxyethane-1,1-diphosphonate, and naphthalenesulfonic salts, especially the sodium salts thereof.

Suitable filming auxiliaries are solvents and plasticizers. Plasticizers, in contrast to solvents, have a low volatility and preferably a boiling point at 1013 mbar of higher than 250°C, while solvents have a higher volatility than plasticizers and preferably a boiling point at 1013 mbar of less than 250°C. Suitable filming auxiliaries are, for example, white spirit, pine oil, propylene glycol, ethylene glycol, butyl glycol, butyl glycol acetate, butyl glycol diacetate, butyl diglycol, butylcarbitol, 1-methoxy-2-propanol, 2,2,2-trimethyl-1,3-pentanediol monoisobutyrate (Texanol®) and the glycol ethers and esters, commercially available, for example, from BASF SE under the Solvenon® and Lusolvan® and Loxanol® names, and from Dow under the Dowanol® trade name. The amount is preferably < 5% by weight and more preferably <

1% by weight, based on the overall formulation. Formulation is also possible completely without filming auxiliaries. If the coating compositions contain filming auxiliaries, these are preferably selected from plasticizers. Frequently, the coating compositions do not require any filming auxiliaries.

Further suitable auxiliaries and components are e.g. described by J. Bieleman in "Additives for Coatings", Whiley-VCH, Weinheim 2000; by T. C. Patton in "Paint Flow and Pigment Dispersions", 2nd Edition, John Whiley & Sons 1978; and by M. Schwartz and R. Baumstark in "Water based Acrylates for Decorative Coatings", Curt R. Vincentz Verlag, Hanover 2001.

The waterborne varnishes of the invention may also be formulated as a low VOC paint. In this case the concentration of volatile compounds in the coating composition is preferably below 0.1 wt.-%, more preferably below 0.05 wt.-%, based on the total amount of the waterborne coating composition. A volatile compound in terms of the invention is a compound, which has a boiling point at 1013 mbar of less than 250°C.

The waterborne varnishes of the invention are particularly useful for coating a wooden substrate such as wood or wood-based materials.

The waterborne varnishes can be applied to substrates to be coated in a customary manner, for example by applying it with brushes or rollers, by spraying, by dipping, by rolling, or by bar coating to the desired substrate. Preferred applications are by brush and/or by roller.

Usually, the coating of substrates is effected in such a way that the substrate is first coated by a waterborne coating composition of the invention and then the thus obtained aqueous coating is subjected to a drying step, especially within the temperature range of ≥ -10 and ≤ +50°C, advantageously ≥ +5 and ≤ +40°C and especially advantageously ≥ +10 and ≤ +35°C.

The substrates coated with a waterborne varnish of the invention have excellent resistance to whitening on exposure to water or to weathering conditions. Moreover, the coatings have high blocking resistance, when containing two or more polymer phases. Yet, the coatings obtained by using a varnish of the invention are less prone to form cracks which are often observed when coating wooden substrates with waterborne coating compositions. Moreover, they are stable against aging and do not suffer from an undesirable increase of viscosity upon storage.

## EXAMPLES

The invention is elucidated in more detail by the examples hereinafter.

### 1. Analytics of the modified polymer latexes

#### 1.1 Solids content

The solids content was determined by drying a defined amount of the aqueous polymer dispersion (about 2 g) to constant weight in an aluminum crucible having an internal diameter of about 5 cm at 130°C in a drying cabinet (2 hours). Two separate measurements were conducted. The value reported in the example is the mean of the two measurements.

#### 1.2 Particle diameter

If not stated otherwise, average particle diameter of the polymer latex was determined by dynamic light scattering (DLS) as described above, using a Malvern HPPS.

The weight-average particle diameter of the polymer latex may also be determined by HDC. Measurements were carried out using a PL-PSDA particle size distribution analyzer (Polymer Laboratories, Inc.). A small amount of sample of the polymer latex was injected into an aqueous eluent containing an emulsifier, resulting in a concentration of approximately 0.5 g/l. The mixture was pumped through a glass capillary tube of approximately 15 mm diameter packed with polystyrene spheres. As determined by their hydrodynamic diameter, smaller particles can sterically access regions of slower flow in capillaries, such that on average the smaller particles experience slower elution flow. The fractionation was finally monitored using an UV-detector which measured the extinction at a fixed wavelength of 254 nm.

#### 1.3 Brookfield viscosity

Viscosity was measured at 20°C according to the standard method DIN EN ISO 3219:1994 using a "Brookfield RV"-type laboratory viscosimeter employing spindles #4 or #5 at 100 revolutions per minute.

#### 1.4 Light transmittance

Light transmittance (LD100 value) of the modified polymer latex was determined by measuring the transmission

light intensity at 525 nm and 1 cm cuvette using the respective polymer dispersion "as is", i.e. in its undiluted form, with Photometer DR 6000 (Hach Lange). The light diffusion factor (LD100 value in %) depicts how much of the light is transmitting the sample at a given cuvette length respective to pure water which exhibits a LD100 value of 100.

The organofunctional silane compound (1) used in the examples was gamma-glycidoxypropyl trimethoxysilane, also termed (3-glycidyloxypropyl)trimethoxysilane (Silquest A 187).

The emulsifier 1 used in the following examples is a 25 wt.-% aqueous solution of the sodium salt of a sulphated ethoxylated alkyl glyceryl allyl ether of the formula (III), degree of ethoxylation = 10 (Adeka Reasoap SR-1025).

1.5 pH value

pH values of the synthesized polymer latices were measured at ambient conditions utilizing a Portamess 913 pH-meter (from Knick Elektronische Messgeräte GmbH & Co. KG) equipped with a glass electrode from SI Analytics. The device is calibrated on regular terms with two buffer solutions (pH 7.00 / pH 9.21).

1.6 Amount of coagulum

To determine the amount of coagulum, the weight of wet residue obtained from filtration was measured. The amount of coagulum was calculated by dividing the measured weight of wet residue by the total weight of ingredients from the recipe depicted below in inventive examples. This calculated value is expressed as percentage by multiplying 100 as follows:

$$Coagulum\,[\%] = \frac{w(wet\ residue)}{\sum w(ingredient)} * 100\ ,$$

wherein w(wet residue) corresponds to the measured weight of wet residue obtained from filtration and Σ w(ingredient) corresponds to the total weight of ingredients from the recipe.

Inventive example 1 (IE-1)

A polymerization vessel equipped with metering devices and temperature regulation was charged at +20 to +25°C (room temperature) under a nitrogen atmosphere with

415.2 g of deionized water,
100.0 g of 3 wt.-% aqueous solution of sodium pyrophosphate and
15.8 g of emulsifier 1
and this initial charge was heated to +80°C with stirring. When this temperature had been reached, the entire feed 1 was added and stirring took place for 2 minutes.

Thereafter feed 2 was commenced and was metered in over the course of 50 minutes. After the end of feed 2, 49.3 g of deionized water were added and polymerization was continued for another 10 minutes, then feed 3 was added and stirred in for 10 minutes. Subsequently, feeds 4 and 5 were commenced and metered in in parallel over the course of 90 minutes.

Feed 1 (homogeneous solution of):

26.6 g of deionized water and
3.6 g of ammonium peroxodisulfate

Feed 2 (homogeneous mixture of):

140.4 g of deionized water
5.3 g of emulsifier 1
204.0 g of a 20 wt.-% aqueous solution of diacetone acrylamide
20.0 g of isooctyl 3-mercaptopropionate
16.3 g of a 25 wt.-% solution of 2-(imidazolin-2-on-1-yl)ethyl methacrylate in methyl methacrylate
40.8 g of n-butyl acrylate
269.3 g of methyl methacrylate, and

40.8 g of methacrylic acid

Feed 3:
45.2 g of a 17.8 wt.-% strength ammonia solution

Feed 4 (homogeneous mixture of):

240.2 g of deionized water
24.0 g of emulsifier 1
158.4 g of 2-ethylhexyl acrylate
158.4 g of n-butyl acrylate
237.6 g of n-butyl methacrylate, and
237.6 g of methyl methacrylate

Feed 5 (homogeneous solution of):

212.4 g of deionized water and
0.6 g of ammonium peroxodisulfate

After the end of feeds 4 and 5, the polymerization mixture was left to react further at +80°C for 10 minutes; then 49.4 g of deionized water were added and stirring was carried out at +80°C for 60 more minutes.
Next, 26.4 g of silane compound (1) was metered to the reaction mixture at a temperature of +80°C followed by addition of 24.0 g of water. Stirring was continued for another 60 minutes.
Still at an elevated temperature of +80°C, 20.5 g of solid adipic dihydrazide together with 24.0 g of flush-water were added and stirred in for 15 minutes.
The aqueous polymer latex obtained by the process described above was then cooled to room temperature. After addition of 36.6 g of 0.8% biocide solution and 145.4 g of additional water, the polymer latex was filtered through a 125 μm filter.

Inventive example 2 (IE-2)

A polymerization vessel equipped with metering devices and temperature regulation was charged at +20 to +25°C (room temperature) under a nitrogen atmosphere with

415.2 g of deionized water,
100.0 g of 3 wt.-% aqueous solution of sodium pyrophosphate and
15.8 g of emulsifier 1
and this initial charge was heated to +80°C with stirring. When this temperature had been reached, the entire feed 1 was added and stirring took place for 2 minutes.

Thereafter feed 2 was commenced and was metered in over the course of 50 minutes. After the end of feed 2, 49.3 g of deionized water were added and polymerization was continued for another 10 minutes, then feed 3 was added and stirred in for 10 minutes. Subsequently, feeds 4 and 5 were commenced and metered in in parallel over the course of 90 minutes.

Feed 1 (homogeneous solution of):

26.6 g of deionized water and
3.6 g of ammonium peroxodisulfate

Feed 2 (homogeneous mixture of):

140.4 g of deionized water
5.3 g of emulsifier 1
204.0 g of a 20 wt.-% aqueous solution of diacetone acrylamide
20.0 g of isooctyl 3-mercaptopropionate
16.3 g of a 25 wt.-% solution of ureidoethyl methacrylate in methyl methacrylate
40.8 g of n-butyl acrylate

269.3 g of methyl methacrylate, and
40.8 g of methacrylic acid

Feed 3:
45.2 g of a 17.8 wt.-% strength aqueous ammonia solution

Feed 4 (homogeneous mixture of):

240.2 g of deionized water
24.0 g of emulsifier 1
198.0 g of 2-ethylhexyl acrylate
198.0 g of n-butyl acrylate, and
396.0 g of methyl methacrylate

Feed 5 (homogeneous solution of):

212.4 g of deionized water and
0.6 g of ammonium peroxodisulfate

After the end of feeds 4 and 5, the polymerization mixture was left to react further at +80°C for 10 minutes; then 49.4 g of deionized water were added and stirring was carried out at +80°C for 60 more minutes.

Next, 26.4 g of silane compound (1) were metered to the reaction mixture at a temperature of +80°C followed by addition of 24.0 g of water. Stirring was continued for another 60 minutes.

Still at an elevated temperature of +80°C, 20.5 g of solid adipic dihydrazide together with 24.0 g of flush-water were added and stirred in for 15 minutes.

The aqueous polymer latex obtained by the process described above was then cooled to room temperature. After addition of 36.6 g of an 0.8% biocide solution and 145.4 g of additional water, the polymer latex was filtered through a 125 μm filter.

Comparative example 1a (CE-1a)

Inventive example IE-1 was repeated with the difference that silane compound (1) was added together with feed 2 during emulsion polymerization of the first-stage polymer.

Comparative example 1b (CE-1b)

Inventive example IE-1 was repeated with the difference that silane compound (1) was added together with feed 4 during emulsion polymerization of the second-stage polymer.

Comparative example 1c (CE-1c)

Inventive example IE-1 was repeated with the difference that silane compound (1) was post-added after emulsion polymerization at a lower temperature of +45°C, only, instead of +80°C as in IE-1.

Comparative example 1d (CE-1d)

Inventive example IE-1 was repeated with the difference that silane compound (1) was post-added after emulsion polymerization at a lower temperature of room temperature (i.e. +20 to +25°C), only, instead of +80°C as in IE-1.

Comparative examples 2a-d (CE-2a to CE-2d)

Same as above with Inventive example IE-2 instead of IE-1 as base recipe.

The results are summarized in the following table 1.

Table 1: Solids content, pH-value, Brookfield viscosity, coagulum, LD100 and average particle diameter of inventive examples IE-1 and IE-2, and comparative examples of CE-1a to 1d and CE-2a to 2d:

| Experiment | solids content | pH value | Brookfield viscosity | coagulum | LD100 | Average particle diameter |
|---|---|---|---|---|---|---|
| | [%] | | [mPas] | [%] | [%] | [nm] |
| IE-1 (GLYMO post-added at +80 °C) | 42.0 | 8.3 | 264 | 0.003 | 13 | 68 |
| CE-1a* (GLYMO in 1st-stage) | 42.4 | 8.2 | 280 | 0.000 | 17 | 76 |
| CE-1b* (GLYMO in 2nd-stage) | 42.5 | 8.2 | 236 | 0.000 | 27 | 66 |
| CE-1c* (GLYMO post-added at +45 °C) | 42.1 | 8.1 | 200 | 0.003 | 22 | 59 |
| CE-1d* (GLYMO post-added at RT) | 42.0 | 8.0 | 240 | 0.000 | 25 | 65 |
| | | | | | | |
| IE-2 (GLYMO post-added at +80 °C) | 42.2 | 8.2 | 232 | 0.007 | 10 | 74 |
| CE-2a* (GLYMO in 1st-stage) | 42.1 | 8.1 | 252 | 0.000 | 18 | 77 |
| CE-2b* (GLYMO in 2nd-stage) | 42.2 | 8.1 | 244 | 0.000 | 26 | 67 |
| CE-2c* (GLYMO post-added at +45 °C) | 42.1 | 8.1 | 216 | 0.003 | 20 | 65 |
| CE-2d* (GLYMO post-added at RT) | 42.3 | 7.9 | 324 | 0.003 | 20 | 60 |
| *comparative - not according to the invention | | | | | | |

Paint formulation

Moreover, paint formulations comprising inventive examples of IE-1 to 2 and comparative examples of CE-1a to 1d and CE-2a to 2b were prepared according to the following procedure and their chemical resistances were analyzed. The results are summarized in the following tables 2 and 3.

In an initial step, a paste was prepared by mixing ingredients 1. to 7. + 12. and homogenizing the mixture with a Speedmixer (Fa. Hauschild) utilizing the following program for dispersing: 30 s at 800 rpm, 30 s at 1000 rpm, 30 s at 1650 rpm, 60 s at 1600 rpm and finally 30 s at 2350 rpm. In parallel, ingredients 8. to 11. were mixed under stirring (binder latex as initial charge with dropwise addition of the other components) and homogenized with help of a Dissolver for 2 min at 1000 rpm. After addition of the afore-mentioned paste to the binder-containing mixture the resultant blend was homogenized for another 5 min at 1000 rpm. The paste was rinsed in a container with deionized water (DI-water, ingredient 13.) and the rinsing water was added to the paint formulation to make up for a total 1000 g. The ingredients 1. to 13. are summarized in the following table A.

Table A: Ingredients 1. to 13.:

| # | compound | supplier | description | solids content | amount (g) |
|---|---|---|---|---|---|
| 1. | Kronos 2190 | Kronos SE | white pigment ($TiO_2$) | 100% | 160 |
| 2. | Dispex CX 4248 | BASF SE | dispersant | 32% | 9 |
| 3. | Foamstar SI 2210 | BASF SE | defoamer | 100% | 1 |
| 4. | Acticid MBS | Thor SE | biocide | 20% | 2 |
| 5. | Rheovis PU1190 | BASF SE | HEUR thickener | 34% | 1 |
| 6. | Ammonia | BASF SE | neutralizing agent | 25% | 2 |
| 7. | Butylglykol (aq.) | BASF SE | solvent | 50% | 100 |
| 8. | Hydropalat SL 3682 | BASF SE | slip/leveling | 65% | 4 |
| 9. | Aquacer 539 | BYK SE | antiblocking agent | 35% | 14 |
| 10. | latex binder | | examples | ca. 42% | 605 |
| 11. | Rheovis HS1162 | BASF SE | HASE thickener | 35% | 6 |

(continued)

| # | compound | supplier | description | solids content | amount (g) |
|---|---|---|---|---|---|
| 12. | DI-water | | | | 30 |
| 13. | DI-water | | | | 66 |
| **TOTAL** | | | | | **1000** |

Paint evaluation

Utilizing an Erichsen film-applicator the paint formulation to be tested was applied on a glass plate at a wet-film thickness of 300 µm and dried for 7 days under normed ambient conditions (23°C, 50% air humidity). As reference, additionally a "good" as well as a "bad" sample were evaluated in parallel in view of their chemical resistance. Selected chemicals were applied on the paint films to be tested and were left there for different periods of time. After the time was up, the test chemicals were removed and the paint film's surface was evaluated directly afterwards for possible damage. Heavy damage as to be observed for the "bad" reference was rated as grade 1 while no visible damage (as for the "good" reference) was rated as grade 5 or grade 7, respectively. The test chemicals, exposure times and rating grades are summarized in the following table B.

Table B: Summary of test chemicals, exposure times and rating grades:

| test chemical | exposure time | "bad" rating | "good" rating |
|---|---|---|---|
| DI-water | 20 h | 1 | 5 |
| tap water | 20 h | 1 | 7 |
| chlorine cleaner | 10 min | 1 | 7 |
| window cleaner | 10 min | 1 | 7 |

Table 2: Evaluation of chemical resistance based on 1st experimental series):

| Binder resin | DI-water | Tap water | Chlorine cleaner | Window cleaner |
|---|---|---|---|---|
| | [grades 0-5] | [grades 0-7] | [grades 0-7] | [grades 0-7] |
| IE-1 (GLYMO post-added at +80 °C) | 0.5 (somewhat matte) | 6 (somewhat matte) | 6 (somewhat matte) | 6 (somewhat matte) |
| CE-1a (GLYMO in 1st-stage) | 1.5 (some small water-spots) | 3 (many large water-spots) | 5 (somewhat matte) | 6 (somewhat matte) |
| CE-1b (GLYMO in 2nd-stage) | 2.0 (several small water-spots) | 1 (many large water-spots) | 5 (somewhat matte) | 6 (somewhat matte) |
| CE-1c (GLYMO post-added at +45 °C) | 0.5 (somewhat matte) | 6 (somewhat matte) | 5 (somewhat matte) | 5 (somewhat matte) |
| CE-1d (GLYMO post-added at RT) | 0.5 (somewhat matte) | 5 (2 large water-spots) | 5 (somewhat matte) | 4 (somewhat matte) |
| [0-5]: 0=best / 5=worst, [0-7]: 0=worst / 7=best | | | | |

Table 3: Evaluation of chemical resistance (based on 2nd experimental series):

| Binder resin | DI-water | Tap water | Chlorine cleaner | Window cleaner |
|---|---|---|---|---|
| | [grades 0-5] | [grades 0-7] | [grades 0-7] | [grades 0-7] |
| IE-2 (GLYMO post-added at +80 °C) | 0.5 (somewhat matte) | 6 (somewhat matte) | 6 (somewhat matte) | 6 (somewhat matte) |
| CE-2a (GLYMO in 1st-stage) | 1.5 (some small water-spots) | 3 (many large water-spots) | 6 (somewhat matte) | 6 (somewhat matte) |

(continued)

| Binder resin | DI-water | Tap water | Chlorine cleaner | Window cleaner |
|---|---|---|---|---|
| | [grades 0-5] | [grades 0-7] | [grades 0-7] | [grades 0-7] |
| CE-2b (GLYMO in 2nd-stage) | 1.0 (few small water-spots) | 3 (many large water-spots) | 6 (somewhat matte) | 6 (somewhat matte) |
| [0-5]: 0=best / 5=worst, [0-7]: 0=worst / 7=best | | | | |

## Claims

1. A process for modifying an aqueous polymer latex of a polymer that bears carboxyl groups, comprising the mixing of the aqueous polymer latex with at least one silane compound of the formula (1),

$$(RO)_{3-n}R^1{}_nSiR^2X \qquad (1)$$

wherein

R is $C_1$-$C_{10}$-alkyl, $C_3$-$C_{10}$-cycloalkyl, $C_6$-$C_{10}$-aryl, $C_1$-$C_{10}$-alkoxy-$C_1$-$C_{10}$-alkyl, $C_2$-$C_{10}$-alkenyl, $C_1$-$C_4$-alkyl-$C_6$-$C_{10}$-aryl or $C_6$-$C_{10}$-aryl-$C_1$-$C_4$-alkyl,
$R^1$ is $C_1$-$C_{10}$-alkyl, $C_3$-$C_{10}$-cycloalkyl, $C_6$-$C_{10}$-aryl, $C_2$-$C_{10}$-alkenyl, $C_1$-$C_4$-alkyl-$C_6$-$C_{10}$-aryl or $C_6$-$C_{10}$-aryl-$C_1$-$C_4$-alkyl,
$R^2$ is a covalent chemical bond or a $C_1$-$C_{20}$-alkylene, in which non-adjacent methylene units can be replaced by O-groups,
n is 0, 1, 2 or 3, and
X is a radical having 3 to 10 carbon atoms and bearing an oxirane group,

where the mixing is carried out at a temperature of at least 60°C.

2. The process according to claim 1, where X in formula (1) is selected from the group consisting of glycidyl, glycidyloxy and epoxy-$C_4$-$C_{10}$-cycloalkyl.

3. The process according to any one of the preceding claims, where

n in formula (1) is 0;
R in formula (1) is methyl or ethyl: amd
$R^2$ in formula (1) is a chemical bond or $C_1$-$C_4$-alkylene.

4. The process according to any one of the preceding claims, where the silane of formula (1) is selected from the group consisting of

(3-glycidoxypropyl)triethoxysilane, (3-glycidoxypropyl)trimethoxysilane, 2-(3,4-epoxycyclohexyl)ethyltriethoxysilane,
2-(3,4-epoxycyclohexyl)ethyltrimethoxysilane,
(3-glycidoxypropyl)methyldiethoxysilane, (3-glycidoxypropyl)methyldimethoxy-silane, (3-glycidoxypropyl)dimethylethoxysilane and 5,6-epoxyhexyltriethoxysilane.

5. The process according to any one of the preceding claims, where the molar ratio of oxirane group of the silane of formula (1) to the carboxyl group of the polymer in the aqueous polymer latex is in the range of 1:1 to 1:20, preferably in the range of 1:2 to 1:15, and more preferably in the range of 1:3 to 1:10.

6. The process according to any one of the preceding claims, where the polymer of the polymer latex ist made of ethylenically unsaturated monomers M comprising at least one monomer M1 selected from monoethylenically unsaturated carboxylic acids.

7. The process according to claim 6, where the at least one carboxylic acid monomer M1 is a monoethylenically

unsaturated monocarboxylic acid.

**8.** The process of any one of claims 6 or 7, where the monomers M comprise

- 0.1 to 10% by weight, based on the total weight of the monomers M, of at least one monoethylenically unsaturated monomer, M1;
- 80 to 99.9% by weight, based on the total weight of the monomers M, of at least one monoethylenically unsaturated nonionic monomer M2 having a solubility in deionized water of at most 50 g/l at 25°C and 1 bar, and
- optionally 0 to 19.9% by weight, based on the total weight of the monomers M, of one or more monoethylenically unsaturated monomers M3, which are different from the monomers M1 and M2.

**9.** The process according to any one of the preceding claims, where the polymer of the aqueous polymer latex is present in the form of polymer particles which comprise an acid-rich shell, where the acid-rich shell of the polymer particles of the aqueous polymer latex in particular comprises 1 to 30 wt.-%, preferably 2 to 20 wt.-%, more preferably 2 to 15 wt.-%, based on the total weight of the acid-rich shell, of at least one polymerized monomer M1 selected from monoethylenically unsaturated carboxylic acids and where the polymer of the aqueous polymer latex contains the acid-rich shell in particular in an amount of 5 to 60 wt.-%, based on the total amount of the polymer particle.

**10.** The process of claim 9, where the polymer latex is prepared by a multistage emulsion polymerization of ethylenically unsaturated monomers M.

**11.** The process according to claim 10, where the multistage emulsion polymerization comprises:

a) a first stage which is an aqueous emulsion polymerization of a first monomer composition of ethylenically unsaturated monomers M.a comprising at least one monomer M1 selected from monoethylenically unsaturated carboxylic acids and at least one monoethylenically unsaturated non-ionic monomer M2 which is sparingly water-soluble, and,
b) a second stage which is an aqueous emulsion polymerization of a second monomer composition of ethylenically unsaturated monomers M.b comprising at least one monoethylenically unsaturated non-ionic monomer M2 which is sparingly water-soluble, in the presence of the polymer of step a).

**12.** The process according to claim 11, where the first stage of aqueous emulsion polymerizing the first monomer composition of ethylenically unsaturated monomers M.a is carried out in the presence of a chain transfer agent and where the aqueous polymer latex obtained in the first stage of aqueous emulsion polymerizing of the first monomer composition M.a is neutralized by addition of a base before carrying out the the second stage of aqueous emulsion polymerizing of the second monomer composition..

**13.** The process according to any one of claims 11 to 12, where the monomers of the first monomer composition M.a are chosen such that theoretical glass transition temperature according to Fox ($Tg^t(a)$) of a polymer formed from monomers M.a is in the range from 50 to 180°C; and
where the monomers of the second monomer composition M.b are chosen such that theoretical glass transition temperature according to Fox of a polymer formed from monomers M.b ($Tg^t(b)$) is in the range from -80 to +50°C, provided that the difference $Tg^t(a)$ - $Tg^t(b)$ is at least 10°C.

**14.** The process according to any one of claims 6 to 13, where the monomers M comprise at least one ethylenically unsaturated monomer which is capable of being crosslinked by a post crosslinking agent.

**15.** The process according to claim 14, where the polymer latex is formulated with a post-crosslinking agent after mixing of the aqueous polymer latex with at least one silane compound of formula (1), where the post crosslinking agent is in particular selected from aliphatic dicarboxylic acid dihydrazides, such as adipic acid dihydrazide.

**16.** A modified aqueous polymer latex obtainable by the process according to any one of the preceding claims.

**17.** The use of the modified aqueous polymer latex according to claim 16 as binder or co-binder for industrial waterbone varnishes, preferably for furniture and door varnishes, where the pigment-volume-concentration (PVC) value of the varnishes is less than 55, preferably less than 50, more preferably less than 45, in particular in the range of 15 to 40.

## Patentansprüche

1. Verfahren zur Modifizierung eines wässrigen Polymerlatex eines Carboxylgruppen tragenden Polymers, umfassend das Mischen des wässrigen Polymerlatex mit mindestens einer Silanverbindung der Formel (1),

$$(RO)_{3-n}R^1{}_nSiR^2X \qquad (1)$$

wobei

R für $C_1$-$C_{10}$-Alkyl, $C_3$-$C_{10}$-Cycloalkyl, $C_6$-$C_{10}$-Aryl, $C_1$-$C_{10}$-Alkoxy-$C_1$-$C_{10}$-alkyl, $C_2$-$C_{10}$-Alkenyl, $C_1$-$C_4$-Alkyl-$C_6$-$C_{10}$-aryl oder $C_6$-$C_{10}$-Aryl-$C_1$-$C_4$-alkyl steht,
$R^1$ für $C_1$-$C_{10}$-Alkyl, $C_3$-$C_{10}$-Cycloalkyl, $C_6$-$C_{10}$-Aryl, $C_2$-$C_{10}$-Alkenyl, $C_1$-$C_4$-Alkyl-$C_6$-$C_{10}$-aryl oder $C_6$-$C_{10}$-Aryl-$C_1$-$C_4$-alkyl steht,
$R^2$ für eine kovalente chemische Bindung oder ein $C_1$-$C_{20}$-Alkylen, in dem nicht benachbarte Methyleneinheiten durch O-Gruppen ersetzt sein können, steht,
n für 0, 1, 2 oder 3 steht und
X für einen Rest mit 3 bis 10 Kohlenstoffatomen, der eine Oxirangruppe trägt, steht,
wobei das Mischen bei einer Temperatur von mindestens 60 °C durchgeführt wird.

2. Verfahren nach Anspruch 1, wobei X in Formel (1) aus der Gruppe bestehend aus Glycidyl, Glycidyloxy und Epoxy-$C_4$-$C_{10}$-cycloalkyl ausgewählt ist.

3. Verfahren nach einem der vorhergehenden Ansprüche, wobei

n in Formel (1) für 0 steht;
R in Formel (1) für Methyl oder Ethyl steht und
$R^2$ in Formel (1) für eine chemische Bindung oder $C_1$-$C_4$-Alkylen steht.

4. Verfahren nach einem der vorhergehenden Ansprüche, wobei das Silan der Formel (1) aus der Gruppe bestehend aus (3-Glycidoxypropyl)triethoxysilan, (3-Glycidoxypropyl)trimethoxysilan, 2-(3,4-Epoxycyclohexyl)ethyltriethoxysilan, 2-(3,4-Epoxycyclohexyl)ethyltrimethoxysilan, (3-Glycidoxypropyl)methyldiethoxysilan, (3-Glycidoxypropyl)methyldimethoxysilan, (3-Glycidoxypropyl)dimethylethoxysilan und 5,6-Epoxyhexyltriethoxysilan ausgewählt ist.

5. Verfahren nach einem der vorhergehenden Ansprüche, wobei das Molverhältnis von Oxirangruppe des Silans der Formel (1) zu Carboxylgruppe des Polymers in dem wässrigen Polymerlatex im Bereich von 1:1 bis 1:20, bevorzugt im Bereich von 1:2 bis 1:15 und weiter bevorzugt im Bereich von 1:3 bis 1:10 liegt.

6. Verfahren nach einem der vorhergehenden Ansprüche, wobei das Polymer des Polymerlatex aus ethylenisch ungesättigten Monomeren M, die mindestens ein Monomer M1, das aus monoethylenisch ungesättigten Carbonsäuren ausgewählt ist, umfassen, aufgebaut ist.

7. Verfahren nach Anspruch 6, wobei es sich bei dem mindestens einen Carbonsäuremonomer M1 um eine monoethylenisch ungesättigte Monocarbonsäure handelt.

8. Verfahren nach Anspruch 6 oder 7, wobei die Monomere M Folgendes umfassen:

- 0,1 bis 10 Gew.-%, bezogen auf das Gesamtgewicht der Monomere M, mindestens eines monoethylenisch ungesättigtem Monomers M1;
- 80 bis 99,9 Gew.-%, bezogen auf das Gesamtgewicht der Monomere M, mindestens eines monoethylenisch ungesättigten nichtionischen Monomers M2 mit einer Löslichkeit in vollentsalztem Wasser von höchstens 50 g/l bei 25 °C und 1 bar und
- gegebenenfalls 0 bis 19,9 Gew.-%, bezogen auf das Gesamtgewicht der Monomere M, eines oder mehrerer monoethylenisch ungesättigten Monomere M3, die von den Monomeren M1 und M2 verschieden sind.

9. Verfahren nach einem der vorhergehenden Ansprüche, wobei das Polymer des wässrigen Polymerlatex in Form von Polymerpartikeln mit einer säurereichen Schale vorliegt, wobei die säurereiche Schale der Polymerpartikel des wässrigen Polymerlatex insbesondere 1 bis 30 Gew.-%, bevorzugt 2 bis 20 Gew.-%, weiter bevorzugt 2 bis 15 Gew.-%, bezogen auf das Gesamtgewicht der säurereichen Schale, mindestens eines polymerisierten Monomers M1, das

aus monoethylenisch ungesättigten Carbonsäuren ausgewählt ist, umfasst, und wobei das Polymer des wässrigen Polymerlatex die säurereiche Schale insbesondere in einer Menge von 5 bis 60 Gew.-%, bezogen auf die Gesamtmenge des Polymerpartikels, enthält.

**10.** Verfahren nach Anspruch 9, wobei der Polymerlatex durch eine mehrstufige Emulsionspolymerisation von ethylenisch ungesättigten Monomeren M hergestellt wird.

**11.** Verfahren nach Anspruch 10, wobei die mehrstufige Emulsionspolymerisation Folgendes umfasst:

a) eine erste Stufe, bei der es sich um eine wässrige Emulsionspolymerisation einer ersten Monomerzusammensetzung ethylenisch ungesättigter Monomere M.a handelt, die mindestens ein Monomer M1, das aus monoethylenisch ungesättigten Carbonsäuren ausgewählt ist, und mindestens ein monoethylenisch ungesättigtes nichtionisches Monomer M2, das schlecht wasserlöslich ist, umfasst, und
b) eine zweite Stufe, bei der es sich um eine wässrige Emulsionspolymerisation einer zweiten Monomerzusammensetzung ethylenisch ungesättigter Monomere M.b handelt, die mindestens ein monoethylenisch ungesättigtes nichtionisches Monomer M2, das schlecht wasserlöslich ist, umfasst, in Gegenwart des Polymers aus Schritt a).

**12.** Verfahren nach Anspruch 11, wobei die erste Stufe der wässrigen Emulsionspolymerisation der ersten Monomerzusammensetzung ethylenisch ungesättigter Monomere M.a in Gegenwart eines Kettenübertragungsmittels durchgeführt wird und wobei der in der ersten Stufe der wässrigen Emulsionspolymerisation der ersten Monomerzusammensetzung M.a erhaltene wässrige Polymerlatex vor der Durchführung der zweiten Stufe der wässrigen Emulsionspolymerisation der zweiten Monomerzusammensetzung durch Zugabe einer Base neutralisiert wird.

**13.** Verfahren nach einem der Ansprüche 11 bis 12, wobei die Monomere der ersten Monomerzusammensetzung M.a so gewählt werden, dass die theoretische Glasübergangstemperatur nach Fox ($Tg^t(a)$) eines aus Monomeren M.a gebildeten Polymers im Bereich von 50 bis 180 °C liegt; und
wobei die Monomere der zweiten Monomerzusammensetzung M.b so gewählt werden, dass die theoretische Glasübergangstemperatur nach Fox eines aus Monomeren M.b ($Tg^t(b)$) gebildeten Polymers im Bereich von -80 bis +50 °C liegt, mit der Maßgabe, dass die Differenz $Tg^t(a)$ - $Tg^t(b)$ mindestens 10 °C beträgt.

**14.** Verfahren nach einem der Ansprüche 6 bis 13, wobei die Monomere M mindestens ein ethylenisch ungesättigtes Monomer, das durch ein Nachvernetzungsmittel vernetzt werden kann, umfasst.

**15.** Verfahren nach Anspruch 14, wobei der Polymerlatex nach dem Mischen des wässrigen Polymerlatex mit mindestens einer Silanverbindung der Formel (1) mit einem Nachvernetzungsmittel formuliert wird, wobei das Nachvernetzungsmittel insbesondere aus aliphatischen Dicarbonsäuredihydraziden, wie Adipinsäuredihydrazid, ausgewählt wird.

**16.** Modifizierter wässriger Polymerlatex, der durch das Verfahren nach einem der vorhergehenden Ansprüche erhältlich ist.

**17.** Verwendung des modifizierten wässrigen Polymerlatex nach Anspruch 16 als Bindemittel oder Co-Bindemittel für technische wässrige Lacke, vorzugsweise für Möbel- und Türlacke, wobei der Wert der Pigmentvolumenkonzentration (PVK) der Lacke kleiner als 55, vorzugsweise kleiner als 50, weiter bevorzugt kleiner als 45, ist und insbesondere im Bereich von 15 bis 40 liegt.

## Revendications

**1.** Procédé de modification d'un latex polymère aqueux constitué d'un polymère qui porte des groupes carboxyle, consistant à mélanger le latex polymère aqueux avec au moins un composé de silane de formule (1) :

$$(RO)_{3-n}R^1{}_nSiR^2X \qquad (1)$$

dans laquelle

R représente un groupe alkyle en $C_1$-$C_{10}$, cycloalkyle en $C_3$-$C_{10}$, aryle en $C_6$-$C_{10}$, (alcoxy en $C_1$-$C_{10}$)-(alkyle en

$C_1$-$C_{10}$), alcényle en $C_2$-$C_{10}$, (alkyle en $C_1$-$C_4$)-(aryle en $C_6$-$C_{10}$) ou (aryle en $C_6$-$C_{10}$)-(alkyle en $C_1$-$C_4$),
$R^1$ représente un groupe alkyle en $C_1$-$C_{10}$, cycloalkyle en $C_3$-$C_{10}$, aryle en $C_6$-$C_{10}$, alcényle en $C_2$-$C_{10}$, (alkyle en $C_1$-$C_4$)-(aryle en $C_6$-$C_{10}$) ou (aryle en $C_6$-$C_{10}$)-(alkyle en $C_1$-$C_4$),
$R^2$ représente une liaison chimique covalente ou un groupe alkylène en $C_1$-$C_{20}$, dans lequel des motifs méthylène non adjacents peuvent être remplacées par des groupes O,
n est 0, 1, 2 ou 3 ; et
X est un radical ayant de 3 à 10 atomes de carbone et portant un groupe oxirane,
le mélange étant effectué à une température d'au moins 60 °C.

2. Procédé selon la revendication 1, dans lequel X, dans la formule (1), est choisi dans le groupe constitué par les groupes glycidyle, glycidyloxy et époxy-(cycloalkyle en $C_4$-$C_{10}$).

3. Procédé selon l'une quelconque des revendications précédentes, dans lequel

n dans la formule (1) est 0 ;
R dans la formule (1) est un groupe méthyle ou éthyle ; et
$R^2$ dans la formule (1) est une liaison chimique ou un groupe alkylène en $C_1$-$C_4$.

4. Procédé selon l'une quelconque des revendications précédentes, dans lequel le silane de formule (1) est choisi dans le groupe constitué par : (3-glycidoxypropyl)triéthoxysilane, (3-glycidoxypropyl)triméthoxysilane, 2-(3,4-époxycyclohexyl)éthyltriéthoxysilane, 2-(3,4-époxycyclohexyl)éthyltriméthoxysilane, (3-glycidoxypropyl)méthyldiéthoxysilane, (3-glycidoxypropyl)méthyldiméthoxysilane, (3-glycidoxypropyl)diméthyléthoxysilane et 5,6-époxyhexyltriéthoxysilane.

5. Procédé selon l'une quelconque des revendications précédentes, dans lequel le rapport molaire du groupe oxirane du silane de formule (1) au groupe carboxyle du polymère dans le latex polymère aqueux est compris entre 1:1 et 1:20, de préférence entre 1:2 et 1:15, et plus préférentiellement entre 1:3 et 1:10.

6. Procédé selon l'une quelconque des revendications précédentes, dans lequel le polymère du latex polymère est constitué de monomères M éthyléniquement insaturés comprenant au moins un monomère M1 choisi parmi les acides carboxyliques monoéthyléniquement insaturés.

7. Procédé selon la revendication 6, dans lequel le ou les monomères acide carboxylique M1 est un acide monocarboxylique monoéthyléniquement insaturé.

8. Procédé selon l'une quelconque des revendications 6 ou 7, dans lequel les monomères M comprennent

- 0,1 à 10 % en poids, par rapport au poids total des monomères M, d'au moins un monomère monoéthyléniquement insaturé, M1 ;
- 80 à 99,9 % en poids, par rapport au poids total des monomères M, d'au moins un monomère non ionique monoéthyléniquement insaturé M2 ayant une solubilité dans l'eau désionisée d'au plus 50 g/l à 25 °C et 1 bar, et
- facultativement 0 à 19,9 % en poids, par rapport au poids total des monomères M, d'un ou plusieurs autres monomères monoéthyléniquement insaturés M3, qui sont différents des monomères M1 et M2.

9. Procédé selon l'une quelconque des revendications précédentes, dans lequel le polymère du latex polymère aqueux est présent sous forme de particules de polymère qui comprennent une enveloppe riche en acide, l'enveloppe riche en acide des particules de polymère du latex polymère aqueux comprenant notamment 1 à 30 % en poids, de préférence 2 à 20 %, et plus préférentiellement 2 à 15 % en poids, par rapport au poids total de l'enveloppe riche en acide, d'au moins un monomère polymérisé M1 choisi parmi les acides carboxyliques monoéthyléniquement insaturés et le polymère du latex polymère aqueux contenant notamment l'enveloppe riche en acide à raison de 5 à 60 % en poids, par rapport à la quantité totale de la particule de polymère.

10. Procédé selon la revendication 9, dans lequel le latex polymère est préparé par polymérisation en émulsion en plusieurs étapes de monomères éthyléniquement insaturés M.

11. Procédé selon la revendication 10, dans lequel la polymérisation en émulsion en plusieurs étapes comprend :

a) une première étape consistant en une polymérisation en émulsion aqueuse d'une première composition de

monomères constituée de monomères éthyléniquement insaturés M.a comprenant au moins un monomère M1 choisi parmi les acides carboxyliques monoéthyléniquement insaturés et au moins un monomère non ionique monoéthyléniquement insaturé M2 qui est peu soluble dans l'eau ; et
b) une deuxième étape consistant en une polymérisation en émulsion aqueuse d'une deuxième composition de monomères constituée de monomères éthyléniquement insaturés M.b comprenant au moins un monomère non ionique monoéthyléniquement insaturé M2 qui est peu soluble dans l'eau, en présence du polymère de l'étape a).

**12.** Procédé selon la revendication 11, dans lequel la première étape de polymérisation en émulsion aqueuse de la première composition de monomères constituée de monomères éthyléniquement insaturés M.a est réalisée en présence d'un agent de transfert de chaîne et dans lequel le latex polymère aqueux obtenu à la première étape de polymérisation en émulsion aqueuse de la première composition de monomères M.a est neutralisé par ajout d'une base avant de réaliser la deuxième étape de polymérisation en émulsion aqueuse de la deuxième composition de monomères.

**13.** Procédé selon l'une quelconque des revendications 11 à 12, dans lequel les monomères de la première composition de monomères M.a sont choisis de telle sorte que la température de transition vitreuse théorique selon Fox ($Tg^t(a)$) d'un polymère formé à partir des monomères M.a soit comprise entre 50 et 180 °C ; et dans lequel les monomères de la deuxième composition de monomères M.b sont choisis de telle sorte que la température de transition vitreuse théorique selon Fox d'un polymère formé à partir des monomères M.b ($Tg^t(b)$) soit comprise entre -80 et +50 °C, à condition que la différence $Tg^t(a)$ - $Tg^t(b)$ soit d'au moins 10 °C.

**14.** Procédé selon l'une quelconque des revendications 6 à 13, dans lequel les monomères M comprennent au moins un monomère éthyléniquement insaturé qui peut être réticulé par un agent de post-réticulation.

**15.** Procédé selon la revendication 14, dans lequel le latex polymère est formulé avec un agent de post-réticulation après le mélange du latex polymère aqueux avec au moins un composé de silane de formule (1), l'agent de post-réticulation étant notamment choisi parmi les dihydrazides d'acide dicarboxylique aliphatique, tels que le dihydrazide d'acide adipique.

**16.** Latex polymère aqueux modifié pouvant être obtenu par le procédé selon l'une quelconque des revendications précédentes.

**17.** Utilisation du latex polymère aqueux modifié selon la revendication 16 comme liant ou co-liant pour des vernis industriels à base d'eau, de préférence pour des vernis pour meubles et portes, la valeur de concentration pigmentaire volumique (CPV) des vernis est inférieure à 55, de préférence inférieure à 50, plus préférentiellement inférieure à 45, en particulier comprise entre 15 et 40.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4032487 A
- US 4077932 A
- EP 0640629 A
- US 2007154646 A1
- DE 4003422 A
- EP 184091 A
- EP 710680 A
- WO 2012130712 A
- WO 201604116 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4977219 A
- US 5047588 A
- US 5117059 A
- EP 0277361 A
- EP 0507407 A
- EP 0628582 A
- US 5352400 A
- US 20110151128 A
- US 20110217471 A
- US 5300602 A
- WO 2015197662 A
- EP 1227116 A
- US 4931494 A
- US 2006247367 A
- US 2004143058 A
- EP 0789724 A
- US 5516453 A
- US 5498659 A
- US 4079028 A
- US 4155892 A
- EP 61822 A
- EP 307775 A
- WO 9631550 A
- EP 612329 A
- EP 1013264 A
- EP 1541643 A
- EP 1584331 A
- EP 2184304 A
- DE 4137247
- DE 102004008015
- DE 102004031786
- US 20110166291 A
- WO 2012052508 A


### Non-patent literature cited in the description


- **M.J. CHEN et al.** *Modern Paint and Coatings*, 1998, vol. 88 (1), 43-49
- **A. DHANABALAN et al.** *Proceedings of the International Waterborne, High-Solids, and Powder Coatings Symposium*, 2008, 323-334
- **NOLL**. Chemie und Technologie der Silikone. 1968
- **HOUBEN-WEYL**. Methoden der organischen Chemie. Georg Thieme Verlag, 1987, vol. E20
- Characterization of Aqueous Polymer Dispersions. **H. WIESE**. Polymer Dispersions and Their Industrial Applications. Wiley-VCH, 2002, 41-73
- **T. G. FOX**. *Bull. Am. Phys. Soc.*, 1956, vol. 1, 123
- Ullmann's Encyclopedia of Industrial Chemistry. Verlag Chemie, 1980, vol. 19, 18
- Ullmann's Encyclopedia of Industrial Chemistry. Verlag Chemie, 1992, vol. A21, 169
- **J. BRANDRUP** ; **E. H. IMMERGUT**. Polymer Handbook. J. Wiley, 1966
- Emulsionspolymerisation. Emulsion Polymerization. Encyclopedia of Polymer Science and Engineering, 1987, vol. 8, 659
- **D. C. BLACKLEY**. *High Polymer Latices*, 1966, vol. 1, 35
- **H. WARSON**. The Applications of Synthetic Resin Emulsions. 1972, 246
- **D. DIEDERICH**. *Chemie in unserer Zeit*, 1990, vol. 24, 135-142
- Emulsion Polymerisation. Interscience Publishers, 1965
- Dispersionen synthetischer Hochpolymerer. **F. HÖLSCHER**. Dispersions of Synthetic High Polymers. Springer-Verlag, 1969

- Methods of Organic Chemistry. Makromolekulare Stoffe [Macromolecular Substances. Georg-Thieme-Verlag, 1961, vol. XIV/1, 192-208
- **J. BRANDRUP** ; **E.H. IMMERGUT**. Polymer Handbook. John Wiley & Sons, 1989, 133-141
- Technology for Waterborne Coatings, ACS Symposium Series 663. Am. Chem. Soc.. 1997, vol. 8, 137-163
- Associative Thickeners. **E.J. SCHALLER et al.** Handbook of Coating Additives. Marcel Decker, vol. 2, 105-164
- PUR-Verdicker. **J. BIELEMAN**. Additives for Coatings. Wiley, 2000, 50-58
- **J. BIELEMAN**. Additives for Coatings. Whiley-VCH, 2000
- **T. C. PATTON**. Paint Flow and Pigment Dispersions. John Whiley & Sons, 1978
- **M. SCHWARTZ** ; **R. BAUMSTARK**. Water based Acrylates for Decorative Coatings. Curt R. Vincentz Verlag, 2001